(19) Europäisches Patentamt

European Patent Office

Office européen des brevets

(11) **EP 4 679 786 A1**

(12) **EUROPEAN PATENT APPLICATION**
published in accordance with Art. 153(4) EPC

(43) Date of publication:
**14.01.2026 Bulletin 2026/03**

(21) Application number: **23929135.4**

(22) Date of filing: **27.03.2023**

(51) International Patent Classification (IPC):
***H04L 27/26*** (2006.01)　　***G01S 13/58*** (2006.01)

(52) Cooperative Patent Classification (CPC):
**H04L 27/26; G01S 13/58**

(86) International application number:
**PCT/CN2023/084180**

(87) International publication number:
**WO 2024/197534 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
- **HU, Yuanzhou
  Shenzhen, Guangdong 518129 (CN)**
- **WANG, Fan
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SEQUENCE TRANSMISSION METHOD, AND APPARATUS**

(57) A sequence transmission method and an apparatus are provided, to improve sensing or detection performance. The method includes: A transmit end apparatus determines N first sequences, where an $n^{th}$ first sequence in the N first sequences is determined based on an $n^{th}$ second sequence in N second sequences, the $n^{th}$ second sequence is determined based on an $n^{th}$ element in a first extension sequence, $n = 0, 1, \ldots, N - 1$, N is a positive integer greater than 1, a first solution of equal sums of powers is determinable based on the first extension sequence, and a degree of the first solution of the equal sums of powers is greater than or equal to 1. The transmit end apparatus sends N1 first sequences in the N first sequences, where each of N1 second sequences corresponding to the N1 first sequences is a sequence in a Golay complementary pair GCP, and N1 is less than or equal to N. A receive end apparatus receives a first signal resulting from transmission of the N1 first sequences, and processes the first signal based on the N1 first sequences or the N1 second sequences corresponding to the N1 first sequences.

FIG. 4

**Description**

**TECHNICAL FIELD**

Embodiments of this application relate to the communication field, and in particular, to a sequence transmission method and an apparatus.

**BACKGROUND**

In downlink synchronization systems, random access systems, sensing systems, radar systems, integrated sensing and communication systems, or the like, it is often necessary to obtain, sense (or detect) a position and/or a speed of a target object.

Currently, a sending device may send a time domain signal generated based on a plurality of sequences (also known as a sequence train). After the time domain signal is transmitted and received by a receiving device, the receiving device may perform detection based on the received signal. Alternatively, the time domain signal is reflected by a target to generate an echo signal, and the sending device may receive the echo signal, and perform detection based on the echo signal. For example, the receiving device or the sending device may calculate an ambiguity function corresponding to the received signal, and detect a position and/or a speed of a target object based on the ambiguity function.

However, there remains room for optimization in the current design of detection performance corresponding to the time domain signal generated based on the plurality of sequences.

**SUMMARY**

This application provides a sequence transmission method and an apparatus, to improve sequence-based detection performance.

According to a first aspect, a sequence transmission method is provided. The method may be performed by a transmit end apparatus, may be performed by a component of the transmit end apparatus, for example, a processor, a chip, or a chip system of the transmit end apparatus, or may be implemented by a logical module or software that can implement all or some functions of the transmit end apparatus. The method includes: determining N first sequences, where an $n^{th}$ first sequence in the N first sequences is determined based on an $n^{th}$ second sequence in N second sequences, the $n^{th}$ second sequence is determined based on an $n^{th}$ element in a first extension sequence, $n = 0, 1, ..., N - 1$, N is a positive integer greater than 1, a first solution of equal sums of powers is determinable based on the first extension sequence, and a degree of the first solution is greater than or equal to 1; and outputting N1 first sequences in the N first sequences, where each of N1 second sequences corresponding to the N1 first sequences is a sequence in a Golay complementary pair GCP, and N1 is less than or equal to N.

According to this solution, the first solution of the equal sums of powers is determinable based on the first extension sequence, and the degree of the first solution of the equal sums of powers is greater than or equal to 1. When the degree of the first solution of the equal sums of powers is greater than or equal to 1, a spectral function corresponding to the first extension sequence has a low ambiguity zone. Therefore, a position and/or a speed of a target object are/is more accurately detected, and a plurality of target objects are more accurately distinguished. In addition, as the degree of the first solution of the equal sums of powers increases, the low ambiguity zone of the spectral function corresponding to the first extension sequence also increases correspondingly, and corresponding detection performance can also be improved, that is, the detection performance can be improved. For example, the position and/or the speed of the target object may be more accurately detected, or the plurality of target objects may be more accurately distinguished, that is, positions and/or speeds of the plurality of target objects may be detected. In addition, for requirements for different low ambiguity zone sizes or low ambiguity zone thresholds, the degree of the first solution may be flexibly designed, so that a proper first extension sequence is flexibly designed, thereby improving a degree of freedom in designing an extension sequence.

According to a second aspect, a sequence processing method is provided. The method may be performed by a receive end apparatus, may be performed by a component of the receive end apparatus, for example, a processor, a chip, or a chip system of the receive end apparatus, or may be implemented by a logical module or software that can implement all or some functions of the receive end apparatus. The method includes: receiving a first signal, where the first signal is a signal resulting from transmission of N1 first sequences in N first sequences, N1 is less than or equal to N, N is a positive integer greater than 1, an $n^{th}$ first sequence in the N first sequences is determined based on an $n^{th}$ second sequence in N second sequences, each of N1 second sequences corresponding to the N1 first sequences is a sequence in a Golay complementary pair GCP, and $n = 0, 1, ..., N - 1$; and processing the first signal based on the N1 first sequences or the N1 second sequences. The $n^{th}$ second sequence is determined based on an $n^{th}$ element in a first extension sequence, a first solution of equal sums of powers is determinable based on the first extension sequence, and a degree of the first solution is greater than or equal to 1.

For technical effects brought by the second aspect, refer to the technical effects brought by the first aspect. Details are not described herein again.

The method according to the first aspect or the second aspect includes but is not limited to the following possible designs.

In a possible design, the first extension sequence is determined based on a first base sequence, a second solution of the equal sums of powers is determinable based on the first base sequence, and a degree of the second solution is less than or equal to the degree of the first solution.

Based on the possible design, because the second solution of the equal sums of powers is determinable based on the first base sequence, when the degree of the second solution is greater than or equal to 1, the spectral function corresponding to the first base sequence has a low ambiguity zone. Further, the first extension sequence determined based on the first base sequence may retain a property of the first base sequence, so that a solution (that is, the first solution) of the equal sums of powers can also be obtained based on the first extension sequence. In addition, the solution of the equal sums of powers has a larger degree, so that the spectral function corresponding to the first extension sequence has a larger low ambiguity zone, thereby improving detection performance.

In a possible design, the second solution is determined based on a first index sequence and a second index sequence. The first index sequence includes an index of a first-type element in the first base sequence, and the first-type element corresponds to a sequence x in the GCP; and the second index sequence includes an index of a second-type element in the first base sequence, and the second-type element corresponds to a sequence y in the GCP.

In a possible design, the first-type element is an element whose value is equal to a first value, and the second-type element is an element whose value is equal to a second value. Alternatively, the first-type element is an element whose amplitude is greater than 0 and whose phase is a first phase, and the second-type element is an element whose amplitude is greater than 0 and whose phase is a second phase.

In a possible design, the first base sequence further includes an element whose value is equal to a third value.

In a possible design, the first index sequence $I_{base,1}$ and the second index sequence $I_{base,2}$ are the second solution of the equal sums of powers. After a same power (power) operation is performed on all elements in the first index sequence and the second index sequence and the elements are added, obtained results are equal. For example, the first index sequence and the second index sequence satisfy:

$$\sum_{i=0}^{N_{base,1}-1} [l_{base,1}(i)]^k = \sum_{j=0}^{N_{base,2}-1} [l_{base,2}(j)]^k, k = 0,1,\dots,P$$

$N_{base,1}$ is a length of the first index sequence. $I_{base,1}(i)$ represents an ith element in the first index sequence. $N_{base,2}$ is a length of the second index sequence. $I_{base,2}(j)$ represents a jth element in the second index sequence. $P$ is the degree of the second solution, and $P$ is a natural number.

In a possible design, the second solution is determined based on the first index sequence, the second index sequence, a first weight sequence, and a second weight sequence, the first weight sequence includes the amplitude of the first-type element, and the second weight sequence includes the amplitude of the second-type element.

In a possible design, the first index sequence $I_{base,1}$, the second index sequence $I_{base,2}$, the first weight sequence $q_{base,1}$, and the second weight sequence $q_{base,2}$ are the second solution of the equal sums of powers. A result obtained by multiplying elements in the first index sequence by elements in the first weight sequence after a power operation is performed on the elements in the first index sequence and adding the elements is the same as a result obtained by multiplying elements in the second index sequence by elements in the second weight sequence after a power operation is performed on the elements in the second index sequence and adding the elements. For example, the first index sequence, the second index sequence, the first weight sequence, and the second weight sequence satisfy:

$$\sum_{i=0}^{N_{base,1}-1} q_{base,1}(i)[l_{base,1}(i)]^k = \sum_{j=0}^{N_{base,2}-1} q_{base,2}(j)[l_{base,2}(j)]^k, k = 0,1,\dots,P$$

$N_{base,1}$ is a length of the first index sequence. $q_{base,1}(i)$ represents an ith element in the first weight sequence. $I_{base,1}(i)$ represents an ith element in the first index sequence. $N_{base,2}$ is a length of the second index sequence. $q_{base,2}(j)$ represents a jth element in the second weight sequence. $I_{base,2}(j)$ represents a jth element in the second index sequence. $P$ is the degree of the second solution, and $P$ is a natural number.

In a possible design, the first extension sequence is the same as the first base sequence. Based on the possible design, after the first base sequence is determined, the first extension sequence can be determined without further calculation, so that calculation complexity can be reduced, and computing resource overheads of the transmit end apparatus can be reduced.

In a possible design, the first extension sequence is determined based on the first base sequence and an offset sequence, a length of the offset sequence is *M,* and *M* is a positive integer.

A length N of the first extension sequence, a length $N_{base}$ of the first base sequence, and an element in the offset sequence satisfy:

$$N = N_{base} + \sum_{m=0}^{M-1} t(m)$$

$t(m)$ represents an $m^{th}$ element in the offset sequence, and $t(m)$ is a positive integer.

Based on the possible design, the first extension sequence determined based on the first base sequence and the offset sequence may retain a property of the first base sequence, so that a solution (that is, the first solution) of the equal sums of powers can also be obtained based on the first extension sequence. In addition, the solution of the equal sums of powers has a larger degree (that is, $P+M$), so that the spectral function corresponding to the first extension sequence has a larger low ambiguity zone, thereby improving detection performance. In addition, for requirements for different low ambiguity zone sizes or low ambiguity zone thresholds, different offset sequences and/or different first base sequences may be flexibly selected, to determine a first extension sequence that meets the requirement, thereby improving a degree of freedom in designing an extension sequence.

In a possible design, the $n^{th}$ element in the first extension sequence is the same as an $n^{th}$ element in a sequence $s_{M-1}$, and the sequence $s_{M-1}$ satisfies:

$$s_{M-1} = \left[s_{M-2}, \mathbf{0}_{1 \times t(M-1)}\right] + \left[\mathbf{0}_{1 \times t(M-1)}, -s_{M-2}\right]$$

$$s_m = \left[s_{m-1}, \mathbf{0}_{1 \times t(m)}\right] + \left[\mathbf{0}_{1 \times t(m)}, -s_{m-1}\right], m = 0,1, \dots, M-1$$

$s_{-1}$ is the same as the first base sequence, $\mathbf{0}_{1 \times t(m)}$ represents a row vector including $t(m)$ 0s, and $s_m$ includes $N_{base} + \sum_{i=0}^{m} t(i)$ elements.

In a possible design, the $n^{th}$ element in the first extension sequence is the same as an $n^{th}$ element in a sequence $s_{M-1}$, and the sequence $s_{M-1}$ satisfies:

$$s_{M-1}(i) = s_{M-2}(i) - s_{M-2}\big(i - t(M-1)\big)$$

$$s_m(i) = s_{m-1}(i) - s_{m-1}\big(i - t(m)\big), m = 0,1, \dots, M-1$$

$s_{-1}$ is the same as the first base sequence, $s_m$ includes $N_{base} + \sum_{j=0}^{m} t(j)$ elements, and $i = 0,1, \dots, N_{base} + \sum_{j=0}^{m} t(j) - 1$.

When $i \geq N_{base} + \sum_{j=0}^{m-1} t(j)$, $s_{m-1}(i) = 0$; and when $i - t(m) < 0$, $s_{m-1}(i - t(m)) = 0$.

In a possible design, the $n^{th}$ element in the first extension sequence is a difference between a first quantity and a second quantity, the first quantity is a quantity of elements whose values are n in a sequence $A_{M-1}$, the second quantity is a quantity of elements whose values are n in a sequence $B_{M-1}$, and the sequence $A_{M-1}$ and the sequence $B_{M-1}$ satisfy:

$$A_{M-1} = [A_{M-2}, B_{M-2} + t(M-1)]$$

$$B_{M-1} = [B_{M-2}, A_{M-2} + t(M-1)]$$

$$A_m = [A_{m-1}, B_{m-1} + t(m)], m = 0,1, \dots, M-1$$

$$\boldsymbol{B}_m = [\boldsymbol{B}_{m-1}, \boldsymbol{A}_{m-1} + t(m)], m = 0, 1, \dots, M-1$$

$\boldsymbol{A}_{-1}$ is a sequence including $q_{hase,1}(i)\, l_{base,1}(i)$s, i = 0, 1, ..., $N_{base,1}$ -1, $\boldsymbol{B}_{-1}$ is a sequence including $q_{base,2}(j)\, l_{base,2}(j)$ s, and $j$ = 0, 1, ..., $N_{base,2}$ - 1.

$q_{base,1}(i)$ represents the ith element in the first weight sequence, $l_{base,1}(i)$ represents the ith element in the first index sequence, $q_{base,2}(j)$ represents the jth element in the second weight sequence, and $l_{base,2}(j)$ represents the jth element in the second index sequence.

Based on the foregoing three possible designs, the foregoing three manners are provided to determine the first extension sequence based on the first base sequence. During actual application, any manner may be flexibly selected based on a requirement or a capability of the transmit end apparatus to determine the first extension sequence. This has high flexibility and wide applicability.

In a possible design, the degree of the second solution is $P$, and the degree of the first solution is $P+M$. Based on the possible design, a solution (that is, the first solution) of the equal sums of powers corresponding to the first extension sequence has a larger degree (that is, $P+M$), so that the spectral function corresponding to the first extension sequence has a larger low ambiguity zone, thereby improving detection performance. In a possible design, the first solution is determined based on a first extension index sequence and a second extension index sequence. The first extension index sequence includes an index of a first-type element in the first extension sequence, and a second sequence corresponding to the first-type element is the sequence x in the GCP; and the second extension index sequence includes an index of a second-type element in the first extension sequence, and a second sequence corresponding to the second-type element is the sequence y in the GCP.

In a possible design, the first extension index sequence $\boldsymbol{l}_{ext,1}$ and the second extension index sequence $\boldsymbol{l}_{ext,2}$ are the first solution of the equal sums of powers. After a same power (power) operation is performed on all elements in the first extension index sequence and the second extension index sequence and the elements are added, obtained results are equal. For example, the first extension index sequence and the second extension index sequence satisfy:

$$\sum_{i=0}^{N_{ext,1}-1} [l_{ext,1}(i)]^k = \sum_{j=0}^{N_{ext,2}-1} [l_{ext,2}(j)]^k, k = 0, 1, \dots, P+M$$

$N_{ext,1}$ is a length of the first extension index sequence, $l_{ext,1}(i)$ represents an ith element in the first extension index sequence, $N_{ext,2}$ is a length of the second extension index sequence, $l_{ext,2}(j)$ represents a jth element in the second extension index sequence, $P$ is the degree of the second solution, $P$ is a natural number, and $P + M$ is the degree of the first solution.

In a possible design, the first solution is determined based on the first extension index sequence, the second extension index sequence, a first extension weight sequence, and a second extension weight sequence, the first extension weight sequence includes an amplitude of the first-type element, and the second extension weight sequence includes an amplitude of the second-type element.

In a possible design, the first extension index sequence $\boldsymbol{l}_{ext,1}$, the second extension index sequence $\boldsymbol{l}_{ext,2}$, the first extension weight sequence $\boldsymbol{q}_{exe,1}$, and the second extension weight sequence $\boldsymbol{q}_{ext,2}$ are the first solution of the equal sums of powers. A result obtained by multiplying elements in the first extension index sequence by elements in the first extension weight sequence after a power operation is performed on the elements in the first extension index sequence and adding the elements is the same as a result obtained by multiplying elements in the second extension index sequence by elements in the second extension weight sequence after a power operation is performed on the elements in the second extension index sequence and adding the elements. For example, the first extension index sequence, the second extension index sequence, the first extension weight sequence, and the second extension weight sequence satisfy:

$$\sum_{i=0}^{N_{ext,1}-1} q_{ext,1}(i)[l_{ext,1}(i)]^k = \sum_{j=0}^{N_{ext,2}-1} q_{ext,2}(j)[l_{ext,2}(j)]^k, k = 0, 1, \dots, P+M$$

$N_{ext,1}$ is a length of the first extension index sequence, $q_{ext,1}(i)$ represents an ith element in the first extension weight sequence, $l_{ext,1}(i)$ represents an ith element in the first extension index sequence, $N_{ext,2}$ is a length of the second extension index sequence, $q_{ext,2}(j)$ represents a jth element in the second extension weight sequence, $l_{ext,2}(j)$ represents a jth element in the second extension index sequence, $P$ is the degree of the second solution, $P$ is a natural number, and $P + M$ is the degree of the first solution.

In a possible design, the $n^{th}$ element $\boldsymbol{s}_{ext}(n)$ in the first extension sequence satisfies:

$$\boldsymbol{s}_{ext}(n) = \begin{cases} 1 & ,n=0 \\ -3 & ,n=1 \\ 4 & ,1<n<N-2, n \bmod 2 = 0 \\ -4 & ,1<n<N-2, n \bmod 2 = 1 \\ 3 & ,n=N-2 \\ -1 & ,n=N-1 \end{cases}$$

mod represents a modulo operation. Based on the possible design, the first extension sequence may be structured, to reduce complexity of determining the first extension sequence.

In a possible design, when the $n^{th}$ element in the first extension sequence is the first value, the $n^{th}$ second sequence in the N second sequences is the sequence x in the GCP; or when the $n^{th}$ element in the first extension sequence is the second value, the $n^{th}$ second sequence in the N second sequences is the sequence y in the GCP. Alternatively, when an amplitude of the $n^{th}$ element in the first extension sequence is greater than 0 and a phase is the first phase, the $n^{th}$ second sequence in the N second sequences is the sequence x in the GCP; or when an amplitude of the $n^{th}$ element in the first extension sequence is greater than 0 and a phase is the second phase, the $n^{th}$ second sequence in the N second sequences is the sequence y in the GCP.

In a possible design, when the $n^{th}$ element in the first extension sequence is the third value, elements in the $n^{th}$ second sequence in the N second sequences are the same.

In a possible design, a power of the $n^{th}$ first sequence in the N first sequences is determined based on the $n^{th}$ element in the first extension sequence.

In a possible design, a ratio of the power of the $n^{th}$ first sequence in the N first sequences to a power of an $n'^{th}$ first sequence is equal to $|\boldsymbol{s}_{ext}(n)|/|\boldsymbol{s}_{ext}(n')|$. Alternatively, a ratio of the power of the $n^{th}$ first sequence in the N first sequences to a power of an $n'^{th}$ first sequence is equal to $[\boldsymbol{s}_{ext}(n)]^2/[\boldsymbol{s}_{ext}(n')]^2$. $|\boldsymbol{s}_{ext}(n)|$ represents the amplitude of the $n^{th}$ element in the first extension sequence, $|\boldsymbol{s}_{ext}(n')|$ represents an $n'^{th}$ element in the first extension sequence, $|\boldsymbol{s}_{ext}(n')| \neq 0$, n and $n'$ are any integers from 0 to N-1, and $n \neq n'$.

Based on the foregoing possible design, a power for sending the N first sequences by the transmit end apparatus may be determined based on the amplitudes of the elements in the first extension sequence, so that a property of the first extension sequence including the first solution of the equal sums of powers is not affected, and a low ambiguity zone of the spectral function corresponding to the first extension sequence maintains good performance, thereby improving detection performance.

In a possible design, the $n^{th}$ first sequence in the N first sequences and the $n^{th}$ second sequence in the N second sequences satisfy one of the following:

the $n^{th}$ first sequence is the same as the $n^{th}$ second sequence;
the $n^{th}$ first sequence is obtained by splicing the $n^{th}$ second sequence and at least one 0;
the $n^{th}$ first sequence is obtained by performing cyclic extension on the $n^{th}$ second sequence; or
the $n^{th}$ first sequence is obtained by splicing at least one 0 and a result obtained by performing cyclic extension on the $n^{th}$ second sequence.

With reference to the first aspect, in a possible design, the outputting the N1 first sequences includes: sequentially sending the N1 first sequences in N1 first time units in N consecutive time units, where lengths of all the N time units are equal, and a length of the time unit is greater than or equal to a length of the first sequence.

With reference to the first aspect, in a possible design, indexes of the N1 first sequences in the N first sequences are the same as indexes of the N1 first time units in the N consecutive time units.

According to a third aspect, a communication apparatus is provided, to implement the foregoing methods. The communication apparatus may be the transmit end apparatus in the first aspect or an apparatus, for example, a chip, included in the transmit end apparatus. Alternatively, the communication apparatus may be the receive end apparatus in the second aspect or an apparatus, for example, a chip, included in the receive end apparatus.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), respectively configured to implement functions of an output class (or a sending class) and an input class (or a receiving class) in any one of the foregoing aspects and the possible designs of the foregoing aspects. The processing module may be configured to implement a processing function in any one of the foregoing aspects and the possible designs of the foregoing aspects.

According to a fourth aspect, a communication apparatus is provided, including at least one processor, where the processor is configured to cause, by executing computer instructions stored in a memory or by using a logic circuit, the communication apparatus to perform the method in any one of the foregoing aspects. The communication apparatus may be the transmit end apparatus in the first aspect or an apparatus, for example, a chip, included in the transmit end apparatus. Alternatively, the communication apparatus may be the receive end apparatus in the second aspect or an apparatus, for example, a chip, included in the receive end apparatus.

In some possible designs, the communication apparatus further includes the memory, configured to store the computer instructions and/or a configuration file of the logic circuit. Optionally, the memory and the processor are integrated together, or the memory is independent of the processor.

According to a fifth aspect, a communication apparatus is provided, including a processor and a communication interface. The communication interface is configured to input and/or output a signal. The processor is configured to execute a computer program or instructions, to cause the communication apparatus to perform the method in any one of the foregoing aspects. The communication apparatus may be the transmit end apparatus in the first aspect or an apparatus, for example, a chip, included in the transmit end apparatus. Alternatively, the communication apparatus may be the receive end apparatus in the second aspect or an apparatus, for example, a chip, included in the receive end apparatus.

In some possible designs, the communication interface is an interface circuit, and is configured to read and write computer instructions. For example, the interface circuit is configured to receive computer-executable instructions (where the computer-executable instructions are stored in a memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip or a chip system. When the apparatus is the chip system, the chip system may include a chip, or may include a chip and another discrete component.

According to a sixth aspect, a communication apparatus is provided, including a logic circuit and an interface circuit. The interface circuit is configured to input and/or output information. The logic circuit is configured to perform the method in any one of the foregoing aspects, and perform processing and/or generate the to-be-output information based on the input information. The communication apparatus may be the transmit end apparatus in the first aspect or an apparatus, for example, a chip, included in the transmit end apparatus. Alternatively, the communication apparatus may be the receive end apparatus in the second aspect or an apparatus, for example, a chip, included in the receive end apparatus.

According to a seventh aspect, a computer-readable storage medium is provided. The computer-readable storage medium stores a computer program or instructions. When the computer program or the instructions are executed by a processor, the method in any one of the foregoing aspects is performed.

According to an eighth aspect, a computer program product is provided. When the computer program product is executed by a processor, the method in any one of the foregoing aspects is performed.

It may be understood that when the communication apparatus provided in any one of the third aspect to the eighth aspect is a chip, the foregoing sending action/function may be understood as outputting information, and the foregoing receiving action/function may be understood as inputting information.

For technical effects brought by any design scheme of the third aspect to the eighth aspect, refer to the technical effects brought by different design schemes of the first aspect or the second aspect. Details are not described herein again.

According to a ninth aspect, a communication system is provided. The communication system includes the transmit end apparatus in the first aspect and the receive end apparatus in the second aspect.

**BRIEF DESCRIPTION OF DRAWINGS**

FIG. 1a is a diagram of relative positions of sequences according to this application;
FIG. 1b is a simulation diagram of a spectral function corresponding to a Prouhet-Thue-Morse PTM sequence according to this application;
FIG. 1c is a simulation diagram of a spectral function of an extension sequence corresponding to Golay complementary pair GCP repeated sequence according to this application;
FIG. 2 is a diagram of a structure of a communication system according to this application;
FIG. 3 is a diagram of a structure of a communication apparatus according to this application;

FIG. 4 is a diagram of interaction in a sequence transmission method according to this application;

FIG. 5 is a diagram of simulation of a spectral function corresponding to a first extension sequence according to this application;

FIG. 6 is a diagram of positions of N1 first time units in N consecutive time units according to this application;

FIG. 7 is a diagram of a structure of a transmit end apparatus according to this application;

FIG. 8 is a diagram of a structure of a receive end apparatus according to this application; and

FIG. 9 is a diagram of a structure of another communication apparatus according to this application.

## DESCRIPTION OF EMBODIMENTS

Unless otherwise specified, "/" in the descriptions of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any proper manner. It may be understood that sequence numbers of the processes do not mean execution orders in various embodiments of this application. The execution orders of the processes should be determined based on functions and internal logic of the processes, and should not be construed as any limitation on implementation processes of embodiments of this application.

It may be understood that, in this application, both "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In various embodiments of this application and the implementations/methods/implementation methods in various embodiments, unless otherwise specified or a logical conflict occurs, terms and/or descriptions are consistent and may be mutually referenced between different embodiments and between the implementations/methods/implementation methods in various embodiments. Technical features in the different embodiments and the implementations/methods/implementation methods in various embodiments may be combined to form a new embodiment, implementation, method, or implementation method based on an internal logical relationship thereof. The following implementations of this application are not intended to limit the protection scope of this application.

For ease of understanding of the technical solutions in embodiments of this application, related technologies of this application are first briefly described below.

(1) Correlation (correlation) operation: It refers to a processing process performed between two sequences, involving multiplication and/or addition operations performed between different elements in the two sequences. The correlation operation may include periodic or aperiodic correlation operations.

For example, the correlation operation may be used to detect a delay, a distance, and the like. For example, a transmit end may send a sequence to a receive end. After receiving the sequence (referred to as a received sequence) from the transmit end, the receive end performs a correlation operation on the received sequence and a local sequence locally generated by the receive end, and determines a transmission delay between the transmit end and the receive end based on a peak position of the correlation operation, to determine a distance between the receive end and the transmit end.

(2) Autocorrelation: If two sequences are the same, a correlation operation performed between them is referred to as autocorrelation (or an autocorrelation operation).

(3) Cross-correlation: If two sequences are different, a correlation operation performed between them is referred to as cross-correlation (or a cross-correlation operation).

(4) Aperiodic autocorrelation: When a sequence autocorrelation is calculated, a correlation value of common elements in two sequences is calculated by using a relative shift between the sequences.

If the sequences have a length of L, there may be a total of 2L-1 cases of the relative shift between the sequences: -L+1, -L+2, ..., -1, 0, 1, ..., L-2, and L-1. Therefore, there are a total of 2L-1 results of the aperiodic autocorrelation operation.

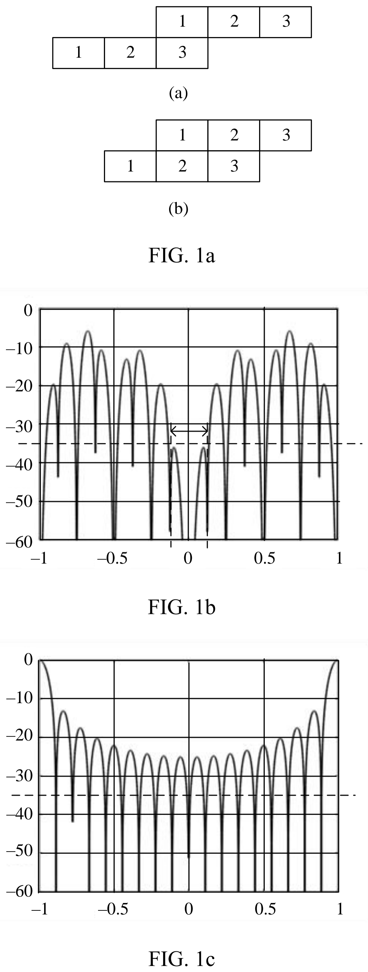

For example, for sequences [1, 2, 3], when a relative shift between the sequences is - 2, relative positions of the sequences may be shown in (a) in FIG. 1a. In this case, an aperiodic autocorrelation result is $1 \times 3 = 3$.

When a relative shift between the sequences is -1, relative positions of the sequences may be shown in (b) in FIG. 1a. In this case, an aperiodic autocorrelation result is $1 \times 2 + 2 \times 3 = 8$. By analogy, when relative shifts between the sequences are respectively -2, -1, 0, 1, and 2, aperiodic autocorrelation results of the sequences are sequentially 3, 8, 14, 8, and 3.

Optionally, there may alternatively be a total of L cases of the relative shift in the aperiodic autocorrelation operation: 0, 1, ..., L-2, and L-1. For example, when an aperiodic autocorrelation operation is performed on sequences $q_1$ with a length of L, a $k^{th}$ value (a value existing when a relative shift is k) obtained through the aperiodic autocorrelation operation may be represented as $\sum_{i=0}^{L-k-1} q_1(i)q_1(i+k)$, $k = 0, 1, ..., L - 1$.

It may be understood that a processing process of an aperiodic cross-correlation operation is similar to that of the aperiodic autocorrelation operation.

(5) Golay complementary pair (Golay complementary pair, GCP):

The GCP, also known as as a Golay complementary pair, Golay complementary sequences, or GCP sequences, is a type of perfect aperiodic autocorrelation sequences. The GCP is defined as follows: For a pair of sequences $x$ and $y$ with code lengths of $L$, if a sum of aperiodic autocorrelation functions (aperiodic autocorrelation functions, AACFs) of the sequences is 0 for all shifts except 0, the two sequences are a GCP. The AACF of the sequence $x = [x(0), x(1), ..., x(L - 1)]$ may be defined as:

$$C_x(k) = \sum_{n=0}^{L-1-k} x(n)x(n+k), 0 \le k \le L - 1$$

$k$ represents the shift; and when $k$ is equal to 0, it indicates that the shift is 0. The AACF (represented as $C_y(k)$) of the sequence $y$ is similar to the AACF of the sequence $x$. For details, refer to the descriptions of $C_x(k)$, and the details are not described herein again.

For example, for sequences $x = [1,1,1, -1]$ and $y = [1,1, -1,1]$, because an AACF of the sequence $x$ is $C_x = [4,1,0, -1]$, $k = 0, ...,3$, an AACF of the sequence $y$ is $C_y = [4, -1,0,1]$, $k = 0, ..,3$, and $C_x + C_y = [8,0,0,0]$, the sequences $x$ and $y$ are a GCP.

(6) Ambiguity function (ambiguity function):

The ambiguity function can be utilized to assess the impact of Doppler shifts and transmission delays on transmitted signal. The Doppler shift arises from movement of a target object, and may be approximated as continuous phase rotation applied to a time-domain continuous signal sent by the transmit end. For example, the ambiguity function may be obtained according to a correlation operation, except the incorporation of Doppler shift into the ambiguity function.

In scenarios of requiring transmission of a plurality of sequences, the transmit end may sequentially generate, based on the plurality of sequences, time-domain continuous signals to carry the plurality of sequences, and send the signals. The time-domain continuous signals received by the receive end may be affected by Doppler shift. Therefore, the receive end may assess, by using the ambiguity function, the impact of the Doppler shift on the transmitted signals (or the plurality of transmitted sequences).

Transmitting a plurality of sequences allows their ambiguity function to generate a low ambiguity zone (low ambiguity zone). The low ambiguity zone of the ambiguity function may be defined by a threshold. Within the low ambiguity zone of the ambiguity function, values of the ambiguity function are all less than or equal to the threshold. In other words, the low ambiguity zone of the ambiguity function is a zone in which all values of the ambiguity function are less than or equal to a specific threshold.

The low ambiguity zone allows a receiver to detect a position and/or a speed of the target object more accurately. In addition, in the low ambiguity zone, a plurality of target objects can be more accurately distinguished, and positions and/or speeds of the target objects are separately detected. Generally, a larger range of the low ambiguity zone indicates a larger detectable speed range and more distinguishable target objects within a specific speed range.

For example, when each of the plurality of sent sequences is a sequence x or a sequence y in a GCP, the ambiguity function A may be approximately represented by the following formula (1):

$$A(\tau, v) \approx \frac{1}{2}\left[C_x(\tau) + C_y(\tau)\right]\sum_{n=0}^{N-1} e^{j2\pi vn/N} + \frac{1}{2}\left[C_x(\tau) - C_y(\tau)\right]\sum_{n=0}^{N-1} s_{ext}(n)e^{j2\pi vn/N} \quad (1)$$

$\tau$ is a time domain (or a delay domain) discrete index, and a value may be 0 to L-1, where L is a sequence length. $v$ is a Doppler domain discrete index, and a value may be 0 to N-1, where N is the quantity of sent sequences. $C_x(\tau)$ and $C_y(\tau)$ are respectively autocorrelation results (for example, aperiodic autocorrelation results) of the sequence x and the sequence y. $e^{j2\pi vn/N}$ is a phase factor introduced by a Doppler shift.

$s_{ext}(n)$ represents an $n^{th}$ element in an extension sequence. The extension sequence is for determining whether each of the plurality of sequences is the sequence x or the sequence y. For example, when a value of a specific element in the extension sequence is 1, an $n^{th}$ sequence in the plurality of sequences is the sequence x; and when a value of a specific element in the extension sequence is -1, an $n^{th}$ sequence in the plurality of sequences is the sequence y.

Because the GCP has a perfect aperiodic autocorrelation property, impact of $\frac{1}{2}\left[C_x(\tau) + C_y(\tau)\right]\sum_{n=0}^{N-1} e^{j2\pi vn/N}$ on the ambiguity function may be ignored. In addition, when $\tau$ is set to different values, $\frac{1}{2}\left[C_x(\tau) - C_y(\tau)\right]\sum_{n=0}^{N-1} s_{ext}(n)e^{j2\pi vn/N}$ is always in direct proportion to $\sum_{n=0}^{N-1} s_{ext}(n)e^{j2\pi vn/N}$. In other words, the ambiguity function is mainly affected by $\sum_{n=0}^{N-1} s_{ext}(n)e^{j2\pi vn/N}$. Therefore, it may be defined that a Doppler-based spectral function $B$ of the extension sequence $s_{ext}$ satisfies the following formula (2):

$$B(v) = \sum_{n=0}^{N-1} s_{ext}(n)e^{j2\pi vn/N} \quad (2)$$

It may be understood that, because the ambiguity function of the plurality of sequences is mainly affected by the formula (2), a low ambiguity zone of the spectral function shown in the formula (2) can be used as an equivalent to the low ambiguity zone of the ambiguity function of the plurality of sequences.

In addition, because the extension sequence is used to determine whether each of the plurality of sequences is the sequence x or the sequence y, it may also be understood that the low ambiguity zone of the ambiguity function of the plurality of sent sequences is affected by an arrangement manner (that is, each sequence is the sequence x or the sequence y) of the plurality of sequences.

(7) Equal sums of powers (equal sums of powers, ESP or equal sums of like powers, ESLP):

The equal sums of powers may mean that after a same power (power) operation is performed on all elements in two non-identical sequences and the elements are added, obtained results are equal.

In other words, a problem of the equal sums of powers is to find a set of solutions (or referred to as two sequence solutions) $S_0$ and $S_1$. $S_0 = [s_0(0), s_0(1), \ldots, s_0(N_0 - 1)]$, $S_1 = [s_1(0), s_1(1), \ldots, s_1(N_1 - 1)]$, and $N_0$ and $N_1$ are positive integers

greater than or equal to 1. The set of solutions $\boldsymbol{S}_0$ and $\boldsymbol{S}_1$ satisfy:

$$\sum_{i=0}^{N_0-1} [s_0(i)]^k = \sum_{j=0}^{N_1-1} [s_1(j)]^k, k = 1, ..., K \qquad (3)$$

$K$ may be referred to as a degree (degree), or referred to as a degree of the equal sums of powers, or referred to as a degree of the solution of the equal sums of powers, or referred to as a degree of the solution.

Optionally, values of the solutions $\boldsymbol{S}_0$ and $\boldsymbol{S}_1$ of the equal sums of powers are generally integers. Certainly, values of $\boldsymbol{S}_0$ and $\boldsymbol{S}_1$ may alternatively be extended to real numbers. In addition, a value range of $k$ in the foregoing formula (3) may alternatively be from 0 to $K$. When $k = 0$, $N_0 = N_1$.

Optionally, in addition to the foregoing formula (3), this application further provides another kind of extended equal sums of powers. In the extended equal sums of powers, a same power (power) operation is performed on all elements in two non-identical sequences, and then the elements are multiplied by a weight value and added, and obtained results are equal.

In other words, a problem of the extended equal sums of powers is to find a set of solutions $\boldsymbol{S}_0$, $\boldsymbol{q}_0$, $\boldsymbol{S}_1$, and $\boldsymbol{q}_1$. $\boldsymbol{S}_0 = [s_0(0), s_0(1), ..., s_0(N_0 - 1)]$, $\boldsymbol{S}_1 = [s_1(0), s_1(1), ..., s_1(N_1 - 1)]$, $\boldsymbol{q}_0 = [q_0(0), q_0(1), ..., q_0(N_0 - 1)]$, $\boldsymbol{q}_1 = [q_1(0), q_1(1), ..., q_1(N_1 - 1)]$, and $N_0$ and $N_1$ are positive integers greater than 1. The set of solutions $\boldsymbol{S}_0$, $\boldsymbol{q}_0$, $\boldsymbol{S}_1$, and $\boldsymbol{q}_1$ satisfy:

$$\sum_{i=0}^{N_0-1} q_0(i)[s_0(i)]^k = \sum_{j=0}^{N_1-1} q_1(j)[s_1(j)]^k, k = 0, ..., K \qquad (4)$$

Optionally, the equal sums of powers shown in the foregoing formula (4) may also be referred to as weighted equal sums of powers. It may be understood that, when all elements in the sequence $\boldsymbol{q}_0$ are the same, all elements in the sequence $\boldsymbol{q}_1$ are the same, and $\boldsymbol{q}_0$ and $\boldsymbol{q}_1$ are completely the same, the foregoing formula (4) may be simplified into the foregoing formula (3). In this case, a solution of the weighted equal sums of powers is the same as a solution of conventional equal sums of powers (as shown in formula (3)).

The transmit end may send a plurality of sequences, and the receive end senses or detects a position and/or a speed of the target object based on the plurality of sequences. Usually, each of the plurality of sequences sent by the transmit end may be the sequence x or the sequence y in the GCP. In some possible implementations, whether a specific sequence is the sequence x or the sequence y may be determined in the following two manners:

Manner 1: Perform determining based on a Prouhet-Thue-Morse (Prouhet-Thue-Morse, PTM) sequence:

The PTM sequence is a binary sequence, to be specific, a value of each element in the PTM sequence is 1 or -1, or is 0 or 1.

When the plurality of to-be-sent sequences are determined based on the PTM sequence, the PTM sequence is an extension sequence corresponding to the plurality of sequences. N elements in the PTM sequence are in one-to-one correspondence with N sequences. The quantity N of sequences is a power of 2, in other words, $N = 2^M$, where $M$ is a positive integer.

For example, a definition may be: When a value of an element in the PTM sequence is 1, a corresponding sequence is the sequence x in the GCP; and correspondingly, when a value of an element in the PTM sequence is -1, a corresponding sequence is the sequence y in the GCP. Alternatively, a definition may be: When a value of an element in the PTM sequence is 0, a corresponding sequence is the sequence x in the GCP; and correspondingly, when a value of an element in the PTM sequence is 1, a corresponding sequence is the sequence y in the GCP.

For example, a PTM sequence with $M$ being 4 and N being 16 is [1, -1, -1, 1, -1, 1, 1, -1, -1, 1, 1, -1, 1, -1, -1, 1] or [0, 1, 1, 0, 1, 0, 0, 1, 1, 0, 0, 1, 0, 1, 1, 0]. In this case, 16 corresponding sequences that are to be sent should be [x, y, y, x, y, x, x, y, y, x, x, y, x, y, y, x].

It should be noted that, in embodiments of this application, unless otherwise specified, x represents the sequence x in the GCP, and y represents the sequence y in the GCP. Unified descriptions are provided herein, and details are not described in the following embodiment again.

Manner 2: Perform determining through GCP repetition:

In this manner, the sequence x and the sequence y in the GCP may be repeated to obtain N sequences. For example, when N=16, 16 corresponding sequences may be [x, y, x, y, x, y, x, y, x, y, x, y, x, y, x, y]. When N=15, 15 corresponding sequences may be [x, y, x, y, x, y, x, y, x, y, x, y, x, y, x].

In analogy with the manner 1, an extension sequence may also be defined in the manner 2. When an element in the extension sequence is 1 (or 0), a corresponding sequence is the sequence x in the GCP; and when an element in the extension sequence is -1 (or 1), a corresponding sequence is the sequence y in the GCP.

For example, when N=16, a corresponding extension sequence may be [1, -1, 1, -1, 1, -1, 1, -1, 1, -1, 1, -1, 1, -1, 1, -1] or [0, 1, 0, 1, 0, 1, 0, 1, 0, 1, 0, 1, 0, 1, 0, 1]. When N=15, a corresponding extension sequence may be [1, -1, 1, -1, 1, -1, 1, -1, 1, -1, 1, -1, 1, -1, 1] or [0, 1, 0, 1, 0, 1, 0, 1, 0, 1, 0, 1, 0, 1, 0].

In the foregoing two manners, whether each sequence sent by the transmit end is the sequence x or the sequence y in the GCP can be determined, but there is still room for optimization in detection performance corresponding to the foregoing two manners.

For example, for the foregoing manner 1, when $M$ is equal to 5 and N is equal to 32, a spectral function that is of a PTM sequence with a length of 32 and that is obtained according to the formula (2) is shown in FIG. 1b. A vertical coordinate is energy (or a value) of the spectral function, and is in a unit of dB. A horizontal coordinate is $2v/N$, where $-N/2 \leq v \leq N/2$, and $v$ is a real number. For example, a threshold is -35 dB. It can be learned from FIG. 1b that a zone in which energy of the spectral function is less than or equal to -35 dB exists near a value of the horizontal coordinate being 0, in other words, a low ambiguity zone exists near the value of the horizontal coordinate being 0. When the horizontal coordinate is 0, a value of $v$ is 0. When $v$ is 0, it indicates that the Doppler domain discrete index is 0, and further indicates that a corresponding moving speed of a target is 0, or indicates that the target is still. Although there is a low ambiguity zone when a plurality of sequences are sent in the manner 1, it can be learned from FIG. 1b that a range of the low ambiguity zone is not large. Therefore, detection performance may not be ideal.

For the foregoing manner 2, using an example in which N is equal to 18 and the extension sequence in the manner 2 is [1, -1, 1, -1, 1, -1, 1, -1, 1, -1, 1, -1, 1, -1, 1, -1, 1, -1], a spectral function that is of the extension sequence and that is obtained according to the formula (2) is shown in FIG. 1c. It is assumed that a threshold is -35 dB, to be specific, a zone in which energy of the spectral function is less than -35 dB is considered as a low ambiguity zone. However, it can be learned from FIG. 1c that the energy of the spectral function corresponding to the extension sequence is always large, and there is no low ambiguity zone.

In view of this, this application provides a sequence transmission method based on the following analysis: Assuming that $2\pi v/N = \theta$ in the formula (2), a phase in the spectral function $B$ may be represented as $e^{j2\pi vn/N} = e^{jn\theta}$. After Taylor expansion (Taylor expansion) is performed on the spectral function $B$ based on $\theta = 0$, the spectral function $B$ may be approximately represented as:

$$B(\theta) \approx \sum_{t=0}^{\infty} \frac{(j\theta)^t}{t!} \left[ \sum_{n=0}^{N-1} n^t s_{ext}(n) \right] \qquad (5)$$

$t$ is an order of the Taylor expansion, that is, $\frac{(j\theta)^t}{t!} \left[ \sum_{n=0}^{N-1} n^t s_{ext}(n) \right]$ is a $t$th order (or a $t$th item) of the Taylor expansion.

It can be learned from the formula (5) that, when $\sum_{n=0}^{N-1} n^t s_{ext}(n) = 0$, the $t$th order of the Taylor expansion of the spectral function $B$ is 0. Assuming that first K+1 (that is, $t = 0, 1, ... , K$) orders of the Taylor expansion of the spectral function $B$ are 0, a larger value of $K$ indicates that $\theta$ in a Doppler domain phase $e^{jn\theta}$ is closer to 0, and indicates a smaller value of the spectral function $B$ (that is, closer to 0), and a large low ambiguity zone is more likely to be generated. That is, an extension sequence needs to be designed, so that the first K+1 orders of the Taylor expansion (based on $\theta = 0$) of the spectral function $B$ are 0, and a value of K needs to be greater than or equal to 1.

In this application, the extension sequence that enables the first K+1 orders of the Taylor expansion of the spectral function $B$ to be 0 may be obtained by using the problem of the equal sums of powers. For example, the solution $S_0$ of the equal sums of powers shown in the formula (3) may include an index of an element corresponding to the sequence x in the extension sequence, and $S_1$ may include an index of an element corresponding to the sequence y in the extension sequence. For example, when a value of an element in the extension sequence $s_{ext}$ is 1, the element corresponds to the sequence x, and when the value is -1, the element corresponds to the sequence y. In this case, the solution $S_0$ of the equal sums of powers is an index of an element whose value is 1 in the extension sequence $s_{ext}$, and the solution $S_1$ of the equal sums of powers is an index of an element whose value is -1 in the extension sequence $s_{ext}$. Therefore, an extension sequence may be determined based on a correspondence between an element value and a sequence and a solution of equal sums of powers.

In other words, in the sequence transmission method provided in this application, an extension sequence may be flexibly designed based on a solution of equal sums of powers, to meet design requirements of different targets, and improve detection performance as much as possible. The sequence transmission method is described in detail in subsequent embodiments, and details are not described herein.

The technical solutions in embodiments of this application may be applied to various communication systems. The communication system may be a 3rd generation partnership project (3rd generation partnership project, 3GPP) communication system, for example, a 4th generation (4th generation, 4G) mobile communication system or a 5th generation (5th generation, 5G) mobile communication system, a 6th generation (6th generation, 6G) mobile communication system or the like that evolves after 5G, a vehicle-to-everything (vehicle-to-everything, V2X) system, a device-to-device (device-to-device, D2D) communication system, a machine-to-machine (machine-to-machine, M2M) communication system, an internet of things (internet of things, IoT) communication system, a narrowband-internet of things (narrowband-internet of things, NB-IoT) communication system, another next generation communication system, an integrated sensing and communication system, a satellite communication system, or the like. The communication system may alternatively be a non-3GPP communication system, for example, a wireless local area network (wireless local area network, WLAN) system such as a wireless fidelity (wireless fidelity, Wi-Fi) system. This is not limited.

The technical solutions in embodiments of this application may be applied to various communication scenarios, for example, sensing and downlink synchronization scenarios.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

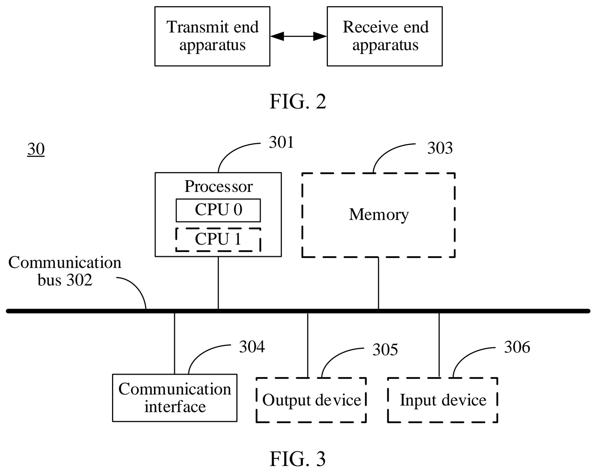

FIG. 2 is a diagram of a structure of a communication system according to this application. The communication system includes a transmit end apparatus and a receive end apparatus. The transmit end apparatus is configured to send sequences, and the receive end apparatus is configured to: receive a signal formed through transmission of the sequences, and process the signal.

In a possible implementation, the transmit end apparatus and the receive end apparatus may be a same apparatus. For example, the transmit end apparatus and the receive end apparatus may be a same network device or a same terminal device. In this case, the sequences sent by the transmit end apparatus arrive at the receive end apparatus through reflection by a target object, and the receive end apparatus may process the received signal, to detect a position and/or a speed of the target object.

In another possible implementation, the transmit end apparatus and the receive end apparatus may be different apparatuses. For example, one of the transmit end apparatus and the receive end apparatus is a network device, and the other is a terminal device. Alternatively, the transmit end apparatus and the receive end apparatus are two different terminal devices or two different network devices. This is not specifically limited in this application. In this scenario, a target object may be understood as the transmit end apparatus or the receive end apparatus. The sequences sent by the transmit end apparatus arrive at the receive end apparatus through transmission. The receive end apparatus may process the received signal, to detect a position of the receive end apparatus relative to the transmit end apparatus and/or relative movement speeds of the receive end apparatus and the transmit end apparatus.

For example, in the downlink synchronization scenario, the transmit end apparatus may be a network device, and the receive end apparatus may be a terminal device. The network device may send a plurality of sequences. The terminal device may receive a signal formed through transmission of the plurality of sequences, and process the signal to detect relative positions of the terminal device and the network device, to determine a transmission delay between the terminal device and the network device based on the relative positions, and further perform downlink synchronization based on the transmission delay.

The terminal device in embodiments of this application may be a user-side device, for example, a terminal or a chip that may be used in the terminal, configured to implement a wireless communication function. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) that evolves after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an uncrewed aerial vehicle, a robot, a smart point of sale (point of sale, POS) machine, customer-premises equipment (customer-premises equipment, CPE) or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in IoT, for example, a terminal (for example, an internet of vehicles device) in V2X, a terminal in D2D communication, or a terminal in M2M communication. The terminal may be movable or fixed.

The network device in embodiments of this application is a device that connects the terminal device to a wireless network. The network device may be referred to as a node in a radio access network (radio access network, RAN), or may be referred to as a radio access network node (or device). A communication system may include a plurality of network devices, and the network devices may be nodes of a same type or nodes of different types.

In some possible scenarios, the network device may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB, and a micro base station eNB in a heterogeneous network scenario. Alternatively, the network device may include a next generation NodeB (next generation NodeB, gNB) in a new radio (new radio, NR) system. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in a non-terrestrial network (non-terrestrial network, NTN), that is, may be deployed on an airplane platform or a satellite. In the NTN, the access network device may be used as a layer 1 (L1) relay (relay), may be used as a base station, or may be used as an integrated access and backhaul (integrated access and backhaul, IAB) node. Alternatively, the network device may be a device that is in IoT and that implements functions of a base station, for example, a device that is in uncrewed aerial vehicle communication, V2X, D2D, or machine-to-machine (machine-to-machine, M2M) and that implements the functions of the base station.

In some possible scenarios, the network device may alternatively be a module or unit that can implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

Optionally, related functions of the transmit end apparatus or the receive end apparatus in this application may be implemented by a communication apparatus 30 in FIG. 3. Refer to FIG. 3. The communication apparatus 30 includes one or more processors 301. Further, the communication apparatus 30 may include a communication bus 302 and at least one communication interface (where FIG. 3 is merely an example, and descriptions are provided by using an example in which the communication apparatus 30 includes a communication interface 304 and one processor 301). Optionally, the communication apparatus 30 may further include a memory 303.

The processor 301 may be a general-purpose central processing unit (central processing unit, CPU), a microprocessor, an application-specific integrated circuit (application-specific integrated circuit, ASIC), one or more integrated circuits configured to control program execution for the solutions of this application, or a processing core configured to process data (for example, computer program instructions). The processor may be a single-core (single-CPU) processor, or may be a multi-core (multi-CPU) processor.

During specific implementation, in an embodiment, the processor 301 may include one or more CPUs such as a CPU 0 and a CPU 1 in FIG. 3.

The communication bus 302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 3, but this does not mean that there is only one bus or only one type of bus. The communication bus 302 is configured to connect different components in the communication apparatus 30, so that the different components in the communication apparatus 30 may communicate and interact with each other.

The communication interface 304 may be a transceiver module, and is configured to communicate with another device or a communication network. The communication network may be, for example, an Ethernet (Ethernet), a RAN, or a WLAN. For example, the communication interface 304 may be an apparatus such as a transceiver or a transceiver machine. Alternatively, the communication interface 304 may be a transceiver circuit located in the processor 301, and is configured to implement signal input and signal output of the processor.

The memory 303 may be an apparatus having a storage function, for example, may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through the communication bus 302. The memory may alternatively be integrated with the processor.

For example, the memory 303 is configured to store computer-executable instructions for executing the solutions of this application, and the processor 301 controls the execution. The processor 301 is configured to execute the computer-executable instructions stored in the memory 303, to implement the method provided in embodiments of this application.

Alternatively, optionally, in this embodiment of this application, the processor 301 may perform functions related to processing in the method provided in the following embodiments of this application, and the communication interface 304 is responsible for communication with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the communication apparatus 30 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

It should be noted that the composition structure shown in FIG. 3 does not constitute limitation on the communication apparatus. In addition to the components shown in FIG. 3, the communication apparatus may include more or fewer components than those shown in the figure, or combine some components, or have different component arrangements.

With reference to the accompanying drawings, the following describes in detail the sequence transmission method provided in embodiments of this application. It may be understood that, in embodiments of this application, a transmit end apparatus or a receive end apparatus may perform some or all of steps in embodiments of this application. These steps or operations are merely examples, and other operations or variants of various operations may be further performed in embodiments of this application. In addition, the steps may be performed in an order different from an order presented in embodiments of this application, and not all the operations in embodiments of this application may be performed.

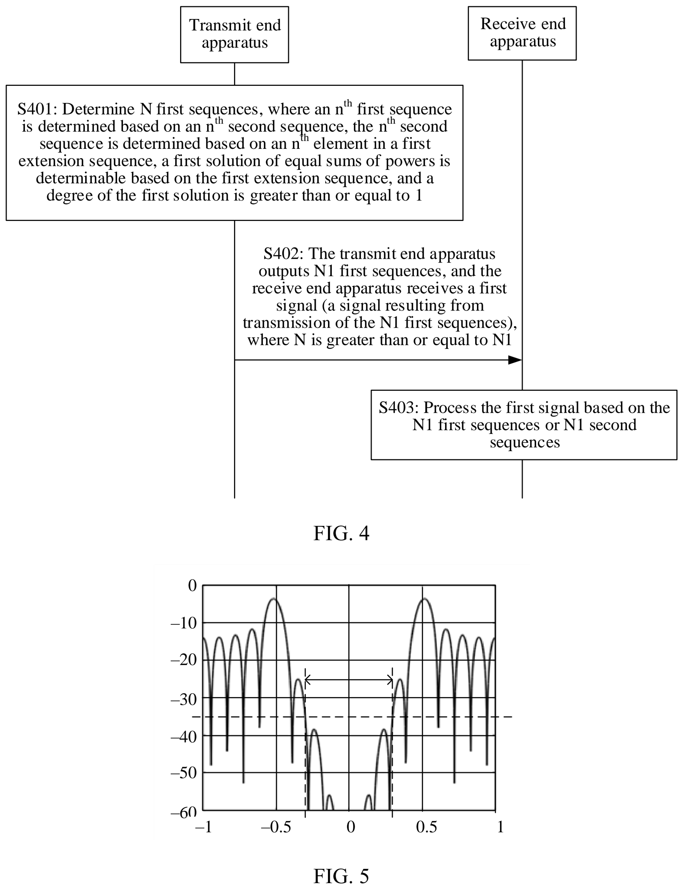

FIG. 4 shows a sequence transmission method according to this application. Refer to FIG. 4. The sequence transmission method includes the following steps.

S401: A transmit end apparatus determines N first sequences.

An $n^{th}$ first sequence in the N first sequences is determined based on an $n^{th}$ second sequence in N second sequences, $n = 0,1, ..., N - 1$, and N is a positive integer greater than 1. To be specific, a $0^{th}$ first sequence in the N first sequences is determined based on a $0^{th}$ second sequence in the N second sequences, and a $1^{st}$ first sequence in the N first sequences is determined based on a $1^{st}$ second sequence in the N second sequences. By analogy, an $(N - 1)^{th}$ first sequence in the N first sequences is determined based on an $(N - 1)^{th}$ second sequence in the N second sequences.

Optionally, the second sequence may be a sequence x in a GCP, or may be a sequence y in the GCP, or may be a sequence in which all included elements are the same. For example, the second sequence may be a 0 sequence, that is, all elements in the second sequence are 0.

The second sequence is determined based on an $n^{th}$ element in a first extension sequence, and $n = 0,1, ..., N - 1$.

To be specific, the first extension sequence includes N elements, and the $n^{th}$ element in the N elements is used to determine the $n^{th}$ second sequence in the N second sequences, or the $n^{th}$ element in the N elements corresponds to the $n^{th}$ second sequence in the N second sequences.

A first solution of equal sums of powers is determinable based on the first extension sequence, or the first extension sequence can be determined based on the first solution of the equal sums of powers.

Optionally, in this embodiment of this application, the solution of the equal sums of powers may also be referred to as a solution of a problem of the equal sums of powers, and the two may be replaced with each other. This is not specifically limited in this application.

A degree of the first solution is greater than or equal to 1. For example, the degree of the first solution may be determined based on a requirement for detection performance. For example, if the detection performance requires a large low ambiguity zone of a spectral function, the degree of the first solution may be large.

Optionally, when the first solution of the equal sums of powers is determinable based on the first extension sequence, first Y orders (that is, 0, 1, ..., and Y orders) of Taylor expansion of a spectral function (or an ambiguity function) corresponding to the first extension sequence based on $\theta = 0$ ($\theta = 2\pi v/N$, where $v = 0$) are 0. Y represents the degree of the first solution of the equal sums of powers.

Optionally, a correspondence between the $n^{th}$ element in the N elements in the first extension sequence and the $n^{th}$ second sequence in the N second sequences may be in the following four manners.

Manner 1: When the $n^{th}$ element in the first extension sequence is a first value, the $n^{th}$ second sequence in the N second sequences is the sequence x in the GCP; or when the $n^{th}$ element in the first extension sequence is a second value, the $n^{th}$ second sequence in the N second sequences is the sequence y in the GCP.

The first value and the second value are two different values. For example, the first value and the second value may be respectively 1 and -1, or may be respectively -1 and 1. Certainly, the first value and the second value may alternatively be other values. For example, the first value and the second value are respectively 1 and 5.

For example, the first value is represented as A, and the second value is represented as B. When N=18, if the first extension sequence is $s_{ext} = [A, B, B, A, A, B, A, B, B, A, A, B, A, B, B, A, A, B]$, the corresponding N second sequences are $\{x, y, y, x, x, y, x, y, y, x, x, y, x, y, y, x, x, y\}$. When the first value and the second value are respectively 1 and -1, the first extension sequence is $s_{ext} = [1, -1, -1, 1, 1, -1, 1, -1, -1, 1, 1, -1, 1, -1, -1, 1, 1, -1]$.

Manner 2: When the $n^{th}$ element in the first extension sequence is a first value, the $n^{th}$ second sequence in the N second sequences is the sequence x in the GCP; when the $n^{th}$ element in the first extension sequence is a second value, the $n^{th}$ second sequence in the N second sequences is the sequence y in the GCP; or when the $n^{th}$ element in the first extension sequence is a third value, elements in the $n^{th}$ second sequence in the N second sequences are the same, for example, the $n^{th}$ second sequence is a 0 sequence.

In other words, when the $n^{th}$ element in the first extension sequence is the third value, the $n^{th}$ second sequence in the N second sequences is not a sequence in the GCP. That is, the $n^{th}$ second sequence is neither the sequence x nor the sequence y. For example, the third value may be equal to 0.

Manner 3: When an amplitude of the $n^{th}$ element in the first extension sequence is greater than 0 and a phase is a first phase, the $n^{th}$ second sequence in the N second sequences is the sequence x in the GCP; or when an amplitude of the $n^{th}$ element in the first extension sequence is greater than 0 and a phase is a second phase, the $n^{th}$ second sequence in the N second sequences is the sequence y in the GCP.

Optionally, for a value $F = |F_1|e^{j\varphi}$, $|F_1|$ is an amplitude of the value F, $F_1$ may be a positive number or a negative number, $\varphi$ is a phase of the value F, and j in $e^{j\varphi}$ is an imaginary number symbol.

The first phase and the second phase are two different phases. For example, the first phase and the second phase may be respectively 0 and $\pi$, or may be respectively $\pi$ and 0. Certainly, the first phase and the second phase may alternatively be other values.

For example, the first phase and the second phase are respectively 0 and $\pi$. If the phase of the $n^{th}$ element in the first extension sequence is the first phase (that is, 0), it indicates that the $n^{th}$ element is a real number greater than 0 (because $e^{j0} = 1$, in this case, $F = |F_1|$). If the phase of the $n^{th}$ element in the first extension sequence is the second phase (that is, $\pi$), it indicates that the $n^{th}$ element is a real number less than 0 (because $e^{j\pi} = -1$, in this case, $F = -|F_1|$).

In other words, when the $n^{th}$ element in the first extension sequence is greater than 0, the $n^{th}$ second sequence in the N second sequences is the sequence x in the GCP; or when the $n^{th}$ element in the first extension sequence is less than 0, the $n^{th}$ second sequence in the N second sequences is the sequence y in the GCP.

Manner 4: When an amplitude of the $n^{th}$ element in the first extension sequence is greater than 0 and a phase is a first phase, the $n^{th}$ second sequence in the N second sequences is the sequence x in the GCP; when an amplitude of the $n^{th}$ element in the first extension sequence is greater than 0 and a phase is a second phase, the $n^{th}$ second sequence in the N second sequences is the sequence y in the GCP; or when the $n^{th}$ element in the first extension sequence is a third value, elements in the $n^{th}$ second sequence in the N second sequences are the same, for example, the $n^{th}$ second sequence is a 0 sequence.

For example, the third value may be 0. In this case, it may be considered that an amplitude of the third value is equal to 0 and a phase is 0. In a possible implementation, when the $n^{th}$ element in the first extension sequence is 0, the $n^{th}$ second sequence in the N second sequences may be a 0 sequence.

S402: The transmit end apparatus outputs N1 first sequences in the N first sequences, and correspondingly, a receive end apparatus receives a first signal.

Each of N1 second sequences corresponding to the N1 first sequences is a sequence in the GCP. N1 is less than or equal to N.

In other words, if the $n^{th}$ second sequence in the N second sequences is a sequence in the GCP, the transmit end apparatus outputs a first sequence corresponding to the $n^{th}$ second sequence; or if the $n^{th}$ second sequence in the N second sequences is not a sequence in the GCP, for example, the $n^{th}$ second sequence is a 0 sequence, the transmit end apparatus does not output a first sequence corresponding to the $n^{th}$ second sequence.

For example, when the second sequence is not a sequence in the GCP, that is, when elements included in the second sequence are the same, elements included in a first sequence determined based on the second sequence may also be the same. In this case, the transmit end apparatus does not send the first sequence. In other words, it may be considered that each of the N1 first sequences includes at least two different elements.

Optionally, that the transmit end apparatus outputs the N1 first sequences may include: The transmit end apparatus sends the N1 first sequences. For example, the N1 first sequences may be mapped and sent in time domain.

Optionally, the transmit end apparatus may sequentially output the N1 first sequences. The sequentially outputting the N1 first sequences may be understood as: sequentially outputting the N1 first sequences according to an arrangement order of the N1 first sequences. For example, an end time domain position of a $0^{th}$ first sequence in the N1 first sequences is before a start time domain position of a $1^{st}$ first sequence in the N1 first sequences, and an end time domain position of the $1^{st}$ first sequence in the N1 first sequences is before a start time domain position of a $2^{nd}$ first sequence in the N1 first sequences. By analogy, an end time domain position of an $(N1 - 2)^{th}$ first sequence in the N1 first sequences is before a start time domain position of an $(N1 - 1)^{th}$ first sequence in the N1 first sequences.

Optionally, that the transmit end apparatus outputs the N1 first sequences may include: The transmit end apparatus outputs N1 time domain signals (denoted as second signals) that are sequentially generated based on the N1 first sequences. For example, when the transmit end apparatus is a network device, the second signal may be a reference signal.

The first signal received by the receive end apparatus may be understood as a signal resulting from transmission of the N1 first sequences (or the N1 second signals). For example, the first signal may be a signal received by the receive end apparatus through wireless transmission of the N1 second signals.

Optionally, when the transmit end apparatus and the receive end apparatus are a same device, the first signal may be understood as echo signals of the N1 second signals.

S403: The receive end apparatus processes the first signal based on the N1 first sequences or the N1 second sequences corresponding to the N1 first sequences.

Optionally, the receive end apparatus may sample the first signal to obtain a received sequence. The received sequence may be understood as the N1 received first sequences. Then, an ambiguity function of the N1 first sequences (or the N1 second sequences corresponding to the N1 first sequences) and the received sequence is calculated, to perform detection or sensing based on the ambiguity function.

For example, when the transmit end apparatus and the receive end apparatus are a same network device, the network device may detect a position and/or a speed of a target object (for example, a terminal device) based on the ambiguity function.

When the transmit end apparatus is a network device and the receive end apparatus is a terminal device, the terminal device may detect a transmission delay between the terminal device and the network device based on the ambiguity function, to perform downlink synchronization based on the transmission delay.

Optionally, when the transmit end apparatus and the receive end apparatus are different apparatuses, the transmit end apparatus may indicate, to the receive end apparatus, the N first sequences or the N second sequences corresponding to the N first sequences. The N first sequences include the N1 first sequences sent by the transmit end apparatus.

For example, one or more sequence sets may be preconfigured in the transmit end apparatus and the receive end apparatus (where each sequence set includes $N$ sequences), and the transmit end apparatus may send, to the receive end apparatus, an index of a first sequence set including the N first sequences, to indicate the N first sequences. Alternatively, when one value of N corresponds to one sequence set, the transmit end apparatus may send or indicate the value of N to the receive end apparatus, to indicate the N first sequences by using the value of N.

Similarly, a plurality of base sequence sets may alternatively be preconfigured in the transmit end apparatus and the receive end apparatus (where each base sequence set may include the N second sequences), and the transmit end apparatus indicates the N second sequences to the receive end apparatus. For details, refer to an indication manner of the N first sequences, and the details are not described herein again.

It may be understood that after the transmit end apparatus indicates the N first sequences to the receive end apparatus, the receive end apparatus may learn of the second sequences corresponding to the N first sequences. Because each of the N1 second sequences corresponding to the N1 first sequences sent by the transmit end apparatus is a sequence in the GCP, the receive end apparatus may determine, based on the N second sequences learned by the receive end apparatus, the N1 first sequences sent by the transmit end apparatus. The N1 first sequences are first sequences corresponding to N1 sequences x or y in the N second sequences.

Similarly, after the transmit end apparatus indicates, to the receive end apparatus, the N second sequences corresponding to the N first sequences, the receive end apparatus may also determine, based on the N second sequences, the N1 first sequences sent by the transmit end apparatus. For details, refer to related descriptions in the foregoing paragraph. Details are not described herein again.

According to this solution, the first solution of the equal sums of powers is determinable based on the first extension sequence, and the degree of the first solution of the equal sums of powers is greater than or equal to 1. When the degree of the first solution of the equal sums of powers is greater than or equal to 1, the spectral function corresponding to the first extension sequence has a low ambiguity zone. Therefore, the position and/or the speed of the target object are/is more accurately detected, and a plurality of target objects are more accurately distinguished. In addition, as the degree of the first solution of the equal sums of powers increases, the low ambiguity zone of the spectral function corresponding to the first extension sequence also increases correspondingly, and corresponding detection performance can also be improved, that is, the detection performance can be improved. In addition, for requirements for different low ambiguity zone sizes or low ambiguity zone thresholds, the degree of the first solution may be flexibly designed, so that a proper first extension sequence is flexibly designed, thereby improving a degree of freedom in designing an extension sequence.

The foregoing describes an overall procedure of the sequence transmission method provided in this application. The following describes a design of the first extension sequence.

Optionally, the first solution of the equal sums of powers is determined based on a first extension index sequence $l_{ext,1}$ and a second extension index sequence $l_{ext,2}$, or the first solution of the equal sums of powers is determinable based on the first extension index sequence $l_{ext,1}$ and the second extension index sequence $l_{ext,2}$.

The first extension index sequence $l_{ext,1}$ includes an index of a first-type element in the first extension sequence, and a second sequence corresponding to the first-type element is the sequence x in the GCP. For example, when the correspondence between the $n^{th}$ element in the first extension sequence and the $n^{th}$ second sequence in the N second sequences is in the manner 1 or manner 2 in S401, a value of the first-type element is the first value. When the correspondence is in the manner 3 or manner 4 in S401, an amplitude of the first-type element is greater than 0 and a phase is the first phase.

The second extension index sequence $l_{ext,2}$ includes an index of a second-type element in the first extension sequence, and a second sequence corresponding to the second-type element is the sequence y in the GCP. For example, when the correspondence between the $n^{th}$ element in the first extension sequence and the $n^{th}$ second sequence in the N second sequences is in the manner 1 or manner 2 in S401, a value of the second-type element is the second value. When the correspondence is in the manner 3 or manner 4 in S401, an amplitude of the second-type element is greater than 0 and a phase is the second phase.

Optionally, elements in the first extension index sequence may be arranged in ascending order of values of indexes of first-type elements. Elements in the second extension index sequence may be arranged in ascending order of values of indexes of second-type elements.

For example, N=14, the first extension sequence $s_{ext}$ = [1, -1, -1, 0, 1, 1, -1, -1,1, 1, 0, -1, -1, 1], the value of the first-type element is 1, and the value of the second-type element is -1. In this case, the first extension index sequence $l_{ext,1}$ is $l_{ext,1}$ = [0,4,5,8,9,13], and the second extension index sequence $l_{ext,2}$ is $l_{ext,2}$ = [1,2,6,7,11,12].

In a possible implementation, the first extension index sequence $l_{ext,1}$ and the second extension index sequence $l_{ext,2}$ are the first solution of the equal sums of powers, satisfying:

$$\sum_{i=0}^{N_{ext,1}-1} [l_{ext,1}(i)]^k = \sum_{j=0}^{N_{ext,2}-1} [l_{ext,2}(j)]^k \, , k = 0,1,\dots,Y \qquad (6)$$

$N_{ext,1}$ is a length of the first extension index sequence, or is a quantity of first-type elements in the first extension sequence. $l_{ext,1}(i)$ represents an $i^{th}$ element in the first extension index sequence. $N_{ext,2}$ is a length of the second extension index sequence, or is a quantity of second-type elements in the first extension sequence. $l_{ext,2}(j)$ represents a $j^{th}$ element in the second extension index sequence. $Y$ represents the degree of the first solution.

In another possible implementation, the first solution of the equal sums of powers is determined based on the first extension index sequence $l_{ext,1}$, the second extension index sequence $l_{ext,2}$, a first extension weight sequence $q_{ext,1}$, and a second extension weight sequence $q_{ext,2}$.

The first extension weight sequence includes the amplitude of the first-type element. Elements in the first extension weight sequence are in one-to-one correspondence with the elements in the first extension index sequence. To be specific, an $i^{th}$ element $q_{ext,1}(i)$ in the first extension weight sequence corresponds to the $i^{th}$ element $l_{ext,1}(i)$ in the first extension index sequence, and the two elements constitute a first-type element in the first extension sequence. For the first-type element, refer to the foregoing related descriptions. Details are not described herein again.

The second extension weight sequence includes the amplitude of the second-type element. Elements in the second extension weight sequence are in one-to-one correspondence with the elements in the second extension index sequence. To be specific, an $i^{th}$ element $q_{ext,2}(i)$ in the second extension weight sequence corresponds to an $i^{th}$ element $l_{ext,2}(i)$ in the second extension index sequence, and the two elements constitute a second-type element in the first extension sequence. For the second-type element, refer to the foregoing related descriptions. Details are not described herein again.

Optionally, the elements in the first extension weight sequence and the second extension weight sequence may be real numbers, that is, amplitudes of elements in the first extension sequence may be real numbers.

For example, N=9, the first extension sequence $s_{ext}$ = [1, -1, -2, 1, 2, 1, -2, -1, 1], the amplitude of the first-type element is greater than 0 and the phase is 0, and the amplitude of the second-type element is greater than 0 and the phase is $\pi$. In this case, the first extension index sequence $l_{ext,1}$ is $l_{ext,1}$ = [0,3,4,5,8], the second extension index sequence $l_{exe,2}$ is $l_{ext,2}$ = [1,2,6,7], the first extension weight sequence $q_{ext,1}$ is $q_{ext,1}$ = [1,1,2,1,1], and the second extension weight sequence $q_{ext,2}$ is $q_{ext,2}$ = [1,2,2,1].

In this possible implementation, optionally, the first extension index sequence $l_{ext,1}$, the second extension index sequence $l_{ext,2}$, the first extension weight sequence $q_{ext,1}$, and the second extension weight sequence $q_{ext,2}$ are the first solution of the equal sums of powers, satisfying:

$$\sum_{i=0}^{N_{ext,1}-1} q_{ext,1}(i)[l_{ext,1}(i)]^k = \sum_{j=0}^{N_{ext,2}-1} q_{ext,2}(j)[l_{ext,2}(j)]^k , k = 0,1,...,Y \qquad (7)$$

$N_{ext,1}$ is a length of the first extension index sequence. $q_{ext,1}(i)$ represents an $i^{th}$ element in the first extension weight sequence. $l_{ext,1}(i)$ represents an $i^{th}$ element in the first extension index sequence. $N_{ext,2}$ is a length of the second extension index sequence. $q_{ext,2}(j)$ represents a $j^{th}$ element in the second extension weight sequence. $l_{ext,2}(j)$ represents a $j^{th}$ element in the second extension index sequence. $Y$ represents the degree of the first solution.

Optionally, when amplitudes of all elements in the first extension sequence are the same (for example, are equal to 1), it may be considered that there is no extension weight sequence. In other words, in this case, the first extension weight sequence is the same as the second extension weight sequence. Further, when the first extension weight sequence is the same as the second extension weight sequence, the first solution of the equal sums of powers may be irrelevant to the first extension weight sequence and the second extension weight sequence. For example, the first solution of the equal sums of powers is the first extension index sequence $l_{ext,1}$ and the second extension index sequence $l_{ext,2}$, and satisfies the foregoing formula (6).

Optionally, when the extension weight sequence exists, the foregoing formula (7) may be understood as a solution of extended equal sums of powers (that is, weighted equal sums of powers).

In addition, this application further provides several specific examples of the first extension sequence. In an example, the first extension sequence may satisfy the following relationship:

$$s_{ext}(n) = \begin{cases} 1 & ,n = 0 \\ -3 & ,n = 1 \\ 4 & ,1 < n < N-2, n \bmod 2 = 0 \\ -4 & ,1 < n < N-2, n \bmod 2 = 1 \\ 3 & ,n = N-2 \\ -1 & ,n = N-1 \end{cases} \qquad \text{(Relationship } A)$$

$s_{ext}(n)$ represents the $n^{th}$ element in the first extension sequence. N is a length of the first extension sequence. $n$ mod 2 indicates that n modulo 2.

In another example, the first extension sequence is [1, -4, 7, -8, 8, -8, 8, -8, 8, -8, 7, -4, 1].

In another example, a possible implementation of the first extension sequence may be shown in Table 1 or Table 2.

Table 1

| Length of a first extension sequence | First extension sequence $s_{ext}$ |
|---|---|
| 14 | [1, -1, -1, 0, 1, 1, -1, -1, 1, 1, 0, -1, -1, 1] |
| 28 | [1, -1, -1, 0, 1, 1, -1, -1, 1, 1, 0, -1, -1, 1, -1, 1, 1, 0, -1, -1, 1, 1, -1, - 1, 0, 1, 1, -1] |
| 56 | [1, -1, -1, 0, 1, 1, -1, -1, 1, 1, 0, -1, -1, 1, -1, 1, 1, 0, -1, -1, 1, 1, -1, - 1, 0, 1, 1, -1, -1, 1, 1, 0, -1, -1, 1, 1, -1, -1, 0, 1, 1, -1, 1, -1, -1, 0, 1, 1, -1, -1, 1, 1, 0, -1, -1, 1] |
| 24 | [1, -1, -1, 0, 1, 0, 0, 1, 0, -1, -1, 1, -1, 1, 1, 0, -1, 0, 0, -1, 0, 1, 1, -1] |
| 48 | [1, -1, -1, 0, 1, 0, 0, 1, 0, -1, -1, 1, -1, 1, 1, 0, -1, 0, 0, -1, 0, 1, 1, -1, - 1, 1, 1, 0, -1, 0, 0, -1, 0, 1, 1, -1, 1, -1, -1, 0, 1, 0, 0, 1, 0, -1, -1, 1] |
| 38 | [1, -1, -1, 0, 1, 0, 0, 0, 1, 0, -1, 0, 0, 0, -1, 0, 1, 1, -1, -1, 1, 1, 0, -1, 0, 0, 0, -1, 0, 1, 0, 0, 0, 1, 0, -1, -1, 1] |
| 42 | [1, -1, 0, -1, 0, 0, 1, 0, 1, 0, 0, 0, -1, 0, -1, 0, 0, 1, 0, 1, -1, -1, 1, 0, 1, 0, 0, -1, 0, -1, 0, 0, 0, 1, 0, 1, 0, 0, -1, 0, -1, 1] |
| 46 | [1, -1, -1, 0, 0, 1, 1, 0, 0, 0, -1, 0, -1, 0, 0, 0, 1, 1, 0, 0, -1, -1, 1, -1, 1, 1, 0, 0, -1, -1, 0, 0, 0, 1, 0, 1, 0, 0, 0, -1, -1, 0, 0, 1, 1, -1] |

Optionally, degrees of first solutions that are obtained based on the first extension sequences in rows from top to bottom shown in Table 1 and that are of the equal sums of powers are respectively 3, 4, 5, 4, 5, 5, 5, and 6.

It should be noted that a second sequence corresponding to an element whose value is 1 in the first extension sequence shown in Table 1 is the sequence x in the GCP, a second sequence corresponding to an element whose value is -1 is the sequence y in the GCP, and a second sequence corresponding to an element whose value is 0 is not a sequence in the GCP.

Table 2

| Length of a first extension sequence | First extension sequence $s_{ext}$ |
|---|---|
| 9 | [1, -1, -2, 1, 2, 1, -2, -1, 1] |
| 10 | [1, -1, -1, -1, 2, 2, -1, -1, -1, 1] |
| 10 | [1, -2, -1, 3, 1, -1, -3, 1, 2, -1] |
| 8 | [1, -3, 2, 2, -2, -2, 3, -1] |
| 10 | [1, -3, 2, 2, -2, -2, 2, 2, -3, 1] |
| 12 | [1, -3, 2, 2, 2, 2, 2, 2, 2, 2, 3, -1] |
| 14 | [1, -3, 2, 2, -2, -2, 2, 2, -2, -2, 2, 2, -3, 1] |
| 14 | [1, -3, 2, 2, -2, -2, 4, -4, 2, 2, -2, -2, 3, -1] |
| 16 | [1, -3, 2, 2, -2, -2, 2, 2, -2, -2, 2, 2, -2, -2, 3, -1] |
| 18 | [1, -3, 2, 2, -2, -2, 2, 2, -2, -2, 2, 2, -2, -2, 2, 2, -3, 1] |
| 19 | [1, 2, 0, 2, 0, 2, 2, 2, 0, 2, 0, 2, 2, 2, 0, 2, 0, 2, 1] |
| 20 | [1, 3, 2, 2, 2, 2, 2, 2, 2, 2, 2, 2, -2, 2, 2, 2, 2, 2, 3, -1] |
| 20 | [1, -3, 2, 2, -2, -2, 4, -4, 2, 2, -2, -2, 4, -4, 2, 2, -2, -2, 3, -1] |

Optionally, degrees of first solutions that are obtained based on the first extension sequences in rows from top to bottom shown in Table 2 and that are of the equal sums of powers are respectively 3, 3, 4, 2, 4, 2, 3, 2, 2, 3, 1, 2 and 2.

It should be noted that a second sequence corresponding to an element whose value is greater than 0 in the first extension sequence shown in Table 2 is the sequence x in the GCP, a second sequence corresponding to an element whose value is less than 0 is the sequence y in the GCP, and a second sequence corresponding to an element whose value is 0 is not a sequence in the GCP.

Optionally, all possible values of the first extension sequence may be some or all possible values in Table 1, or may be some or all possible values in Table 2.

Optionally, when the transmit end apparatus and the receive end apparatus are different apparatuses, before step S402, the transmit end apparatus may indicate the first extension sequence to the receive end apparatus, so that the receive end apparatus determines the N second sequences, to determine the N1 first sequences sent by the transmit end apparatus or the N1 second sequences corresponding to the N1 first sequences, and process the first signal based on the N1 first sequences or the N1 second sequences.

For example, some or all of the first extension sequences shown in Table 1 or Table 2 may be preconfigured (or stored) in the transmit end apparatus and the receive end apparatus. The transmit end apparatus may send signaling to the receive end apparatus to indicate a first extension sequence in Table 1 or Table 2. For example, the transmit end apparatus may send an index of the first extension sequence in Table 1 or Table 2 to the receive end apparatus, to indicate the first extension sequence.

The foregoing describes a feature that the first extension sequence has or meets, and the following describes a manner of determining the first extension sequence.

Optionally, the first extension sequence is determined based on a first base sequence. A second solution of the equal sums of powers is determinable based on the first base sequence, or the first base sequence can be determined based on the second solution of the equal sums of powers. A degree of the second solution of the equal sums of powers is less than or equal to the degree of the first solution of the equal sums of powers.

Optionally, when the second solution of the equal sums of powers is determinable based on the first base sequence, first P orders of Taylor expansion of a spectral function (or an ambiguity function) corresponding to the first base sequence based on $\theta = 0$ ($\theta = 2\pi v/N$) are 0. P represents the degree of the second solution of the equal sums of powers.

Optionally, elements in a weight sequence corresponding to the first base sequence may be symmetric. The weight sequence corresponding to the first base sequence includes amplitudes of all elements in the first base sequence. That the elements in the sequence are symmetric means that two elements whose sum of indexes is equal to N-1 in the sequence are equal. For example, N is equal to 4. When the elements in the sequence are symmetric, elements whose indexes are 0 and 3 are equal, and elements whose indexes are 1 and 2 are equal.

Optionally, the second solution of the equal sums of powers is determined based on a first index sequence $I_{base,1}$ and a second index sequence $I_{base,2}$, or the second solution of the equal sums of powers is determinable based on the first index sequence $I_{base,1}$ and the second index sequence $I_{base,2}$. The degree of the second solution is greater than or equal to 0.

The first index sequence $I_{base,1}$ includes an index of a first-type element in the first base sequence, and the first-type element corresponds to the sequence x in the GCP. For example, a value of the first-type element is the first value, or an amplitude of the first-type element is greater than 0 and a phase is the first phase. For example, the first value may be 1, and the first phase may be 0.

The second index sequence $I_{base,2}$ includes an index of a second-type element in the first base sequence, and the second-type element corresponds to the sequence y in the GCP. For example, a value of the second-type element is the second value, or an amplitude of the second-type element is greater than 0 and a phase is the second phase. For example, the second value may be -1, and the second phase may be $\pi$.

Optionally, elements in the first index sequence may be arranged in ascending order of values of indexes of first-type elements. Elements in the second index sequence may be arranged in ascending order of values of indexes of second-type elements.

Optionally, the first base sequence further includes an element whose value is equal to the third value. For example, the third value may be 0. The first base sequence with an element being the third value may correspond to a sequence in which elements are the same, for example, a 0 sequence.

For example, a length of the first base sequence is 8, the first base sequence $s_{base} = [1, -1, -1, 1, 1, -1, -1, 1]$, the value of the first-type element is 1, and the value of the second-type element is -1. In this case, the first index sequence $I_{base,1}$ is $I_{base,1} = [0,3,4,7]$, and the second extension index sequence $I_{ext,2}$ is $I_{ext,2} = [1,2,5,6]$. Alternatively, for example, a length of the first base sequence is 12, the first base sequence $s_{base} = [1, -1, -1, 0, 1, 0, 0, 1, 0, -1, -1, 1]$, the value of the first-type element is 1, and the value of the second-type element is -1. In this case, the first index sequence $I_{base,1}$ is $I_{base,1} = [0,4,7,11]$, and the second extension index sequence $I_{ext,2}$ is $I_{ext,2} = [1,2,9,10]$.

In a possible implementation, the first index sequence $I_{base,1}$ and the second index sequence $I_{base,2}$ are the second solution of the equal sums of powers, satisfying:

$$\sum_{i=0}^{N_{base,1}-1} [l_{base,1}(i)]^k = \sum_{j=0}^{N_{base,2}-1} [l_{base,2}(j)]^k, \, k = 0, 1, \ldots, P \qquad (8)$$

$N_{base,1}$ is a length of the first index sequence, or is a quantity of first-type elements in the first base sequence. $l_{base,1}(i)$ represents an $i^{th}$ element in the first index sequence. $N_{base,2}$ is a length of the second index sequence, or is a quantity of second-type elements in the first base sequence. $l_{base,2}(j)$ represents a $j^{th}$ element in the second index sequence. $P$ represents the degree of the second solution, and $P$ is a natural number.

For example, when the first index sequence and the second index sequence that correspond to the first base sequence whose length is 8 are used as the second solution of the equal sums of powers, the degree $P$ of the second solution is equal to 1. When the first index sequence and the second index sequence that correspond to the first base sequence whose length is 12 are used as the second solution of the equal sums of powers, the degree $P$ of the second solution is equal to 3.

In another possible implementation, the second solution of the equal sums of powers is determined based on the first index sequence $l_{base,1}$, the second index sequence $l_{base,2}$, a first weight sequence $\boldsymbol{q}_{base,1}$, and a second weight sequence $\boldsymbol{q}_{base,2}$,

The first weight sequence includes the amplitude of the first-type element. Elements in the first weight sequence are in one-to-one correspondence with the elements in the first index sequence. To be specific, an $i^{th}$ element $q_{base,1}(i)$ in the first weight sequence corresponds to the $i^{th}$ element $l_{base,1}(i)$ in the first index sequence, and the two elements constitute a first-type element in the first base sequence. For the first-type element, refer to the foregoing related descriptions. Details are not described herein again.

The second weight sequence includes the amplitude of the second-type element. Elements in the second weight sequence are in one-to-one correspondence with the elements in the second index sequence. To be specific, an $i^{th}$ element $q_{base,2}(i)$ in the second weight sequence corresponds to an $i^{th}$ element $l_{base,2}(i)$ in the second index sequence, and the two elements constitute a second-type element in the first base sequence. For the second-type element, refer to the foregoing related descriptions. Details are not described herein again.

Optionally, elements in the first weight sequence and the second weight sequence may be symmetric. For symmetry of the elements in the sequence, refer to the foregoing descriptions. Details are not described herein again.

Optionally, the elements in the first weight sequence and the second weight sequence may be real numbers, that is, amplitudes of elements in the first base sequence may be real numbers.

For example, the amplitude of the first-type element is greater than 0 and the phase is 0 (that is, a value of the first-type element is greater than 0), the amplitude of the second-type element is greater than 0 and the phase is $\pi$ (that is, a value of the second-type element is less than 0), and the first base sequence $\boldsymbol{s}_{base}$ = [0.69, -4.29, 9.48, -6.23, -6.56, 7.70, 7.13, -7.92, -7.92, 7.13, 7.70, -6.56, -6.23, 9.48, -4.29, 0.69]. In this case, the first index sequence $l_{base,1}$ is $l_{base,1}$ = [0, 2, 5, 6, 9, 10, 13, 15], and the second index sequence $l_{base,2}$ is $l_{base,2}$ = [1, 3, 4, 7, 8, 11, 12, 14]. Correspondingly, the first weight sequence $\boldsymbol{q}_{base,1}$ is $\boldsymbol{q}_{base,1}$ = [0.69, 9.48, 7.70, 7.13, 7.13, 7.70, 9.48, 0.69], and the second weight sequence $\boldsymbol{q}_{base,2}$ is $\boldsymbol{q}_{base,2}$ = [4.29, 6.23, 6.56, 7.92, 7.92, 6.56, 6.23, 4.29]. In this example, the elements in the first weight sequence and the second weight sequence are symmetric.

According to this solution, when the elements in the weight sequence corresponding to the first base sequence are symmetric, or the elements in the first weight sequence and the second weight sequence are symmetric, because the elements are symmetric, amplitudes of only half of the elements need to be designed during design, and amplitudes of the other half of the elements may be directly determined based on symmetry, thereby reducing sequence design complexity. In addition, most window functions (for example, Hamming windows) or filters used in a current signal processing process are symmetric. Therefore, element symmetry in a designed sequence better complies with a conventional signal processing rule, and compatibility is high.

In this possible implementation, optionally, the first index sequence $l_{base,1}$, the second index sequence $l_{base,2}$, the first weight sequence $\boldsymbol{q}_{base,1}$, and the second weight sequence $\boldsymbol{q}_{base,2}$ are the second solution of the equal sums of powers, satisfying:

$$\sum_{i=0}^{N_{base,1}-1} q_{base,1}(i)[l_{base,1}(i)]^k = \sum_{j=0}^{N_{base,2}-1} q_{base,2}(j)[l_{base,2}(j)]^k , k = 0,1,\dots,P \qquad (9)$$

$N_{base,1}$ is a length of the first index sequence. $q_{base,1}(i)$ represents an $i^{th}$ element in the first weight sequence. $l_{base,1}(i)$ represents an $i^{th}$ element in the first index sequence. $N_{base,2}$ is a length of the second index sequence. $q_{base,2}(j)$ represents a $j^{th}$ element in the second weight sequence. $l_{base,2}(j)$ represents a $j^{th}$ element in the second index sequence. $P$ represents the degree of the second solution, and $P$ is a natural number.

Optionally, when amplitudes of all elements in the first base sequence are the same (for example, are equal to 1), it may be considered that there is no weight sequence. In other words, in this case, the first weight sequence is the same as the second weight sequence. Further, when the first weight sequence is the same as the second weight sequence, the second solution of the equal sums of powers may be irrelevant to the first weight sequence and the second weight sequence. For example, the second solution of the equal sums of powers is the first index sequence $I_{base,1}$ and the second index sequence $I_{base,2}$, and satisfies the foregoing formula (8).

Optionally, when the weight sequence exists, the foregoing formula (9) may be understood as a solution of extended equal sums of powers (that is, weighted equal sums of powers).

In an example, a possible implementation of the first base sequence may be shown in Table 3.

Table 3

| Length of a first base sequence | First base sequence $s_{base}$ |
| --- | --- |
| 3 | [1, -2, 1] |
| 4 | [1, -1, -1, 1] |
| 5 | [1, -2, 0, 2, -1] |
| 7 | [1, -1, -1, 0, 1, 1, -1] |
| 12 | [1, -1, -1, 0, 1, 0, 0, 1, 0, -1, -1, 1] |
| 19 | [1, -1, -1, 0, 1, 0, 0, 0, 1, 0, -1, 0, 0, 0, -1, 0, 1, 1, -1] |
| 21 | [1, -1, 0, -1, 0, 0, 1, 0, 1, 0, 0, 0, -1, 0, -1, 0, 0, 1, 0, 1,-1] |
| 23 | [1, -1, -1, 0, 0, 1, 1, 0, 0, 0, -1, 0, -1, 0, 0, 0, 1, 1, 0, 0, -1, -1, 1] |

Optionally, the first base sequence shown in Table 3 may be determined according to the method in the foregoing embodiments of this application. In this case, degrees $P$ of second solutions corresponding to the first base sequences in rows from top to bottom shown in Table 3 are respectively 1, 1, 2, 2, 3, 4, 4, and 5. Alternatively, the first base sequence shown in Table 3 may be determined according to another method. A manner of determining the first base sequence shown in Table 3 is not specifically limited in this application.

In another example, a possible implementation of the first base sequence may be shown in Table 4.

Table 4

| Length of a first base sequence | First base sequence $s_{base}$ |
| --- | --- |
| 6 | [1, -1, -1, 1, 1, -1] |
| 8 | [1, -1, -1, 1, 1, -1, -1, 1] |
| 8 | [1, -1, -1, 1, -1, 1, 1, -1] |
| 10 | [1,-1,-1, 1, 1,-1,-1, 1, 1, -1] |
| 12 | [1, -1, -1, 1, -1, 1, 1,-1, 1,-1,-1, 1] |
| 14 | [1, -1, -1, 1, 1, -1, -1, 1, 1, -1, -1, 1, 1, -1] |
| 16 | [1, -1, -1, 1, 1, -1, -1, 1, 1,-1,-1, 1, 1,-1,-1, 1] |
| 16 | [1, -1, -1, 1, -1, 1, 1,-1, 1,-1,-1, 1, -1, 1, 1,-1] |
| 16 | [1, -1, -1, 1, -1, 1, 1,-1,-1, 1, 1,-1, 1, -1, -1, 1] |
| 18 | [1, -1, -1, 1, 1, -1, 1, -1, -1, 1, 1, -1, 1, -1, -1, 1, 1, -1] |
| 18 | [1, -1, -1, 1, 1, -1, -1, 1, 1, -1, -1, 1, 1, -1, -1, 1, 1, -1] |
| 20 | [1, -1, -1, 1, -1, 1, 1,-1, 1, -1, -1, 1,-1, 1, 1, -1, 1,-1,-1, 1] |
| 20 | [1, -1, -1, 1, 1, -1, -1, 1, 1, -1, 1, -1, -1, 1, 1, -1, -1, 1, 1, -1] |
| 22 | [1, -1, -1, 1, 1, -1, -1, 1, 1, -1, -1, 1, 1, -1, -1, 1, 1, -1, -1, 1, 1, -1] |
| 24 | [1, -1, -1, 1, 1, 1, -1, -1, 1, 1, -1, 1, -1, -1, 1, 1, -1, 1, -1, -1, 1, 1,-1] |

Optionally, the first base sequence shown in Table 4 may be determined according to the method in the foregoing embodiments of this application. In this case, degrees $P$ of second solutions corresponding to the first base sequences in rows from top to bottom shown in Table 4 are respectively 0, 1, 2, 0, 1, 0, 1, 2, 3, 0, 0, 1, 0, 0 and 0. Alternatively, the first base sequence shown in Table 4 may be determined according to another method. A manner of determining the first base sequence shown in Table 4 is not specifically limited in this application.

Optionally, the first base sequence shown in Table 4 may be properly transformed to obtain a new first base sequence. For example, each element in the first base sequence shown in Table 4 may be multiplied by a value C, to obtain a new first base sequence. *C* may be any value.

In still another example, a possible implementation of the first base sequence may be shown in Table 5.

Table 5

| Length of a first base sequence | First base sequence $s_{base}$ |
|---|---|
| 16 | [0.69, -4.29, 9.48, -6.23, -6.56, 7.70, 7.13, -7.92, -7.92, 7.13, 7.70, -6.56, -6.23, 9.48, -4.29, 0.69] |

Optionally, the first base sequence shown in Table 5 may be determined according to the method in the foregoing embodiments of this application. In this case, a degree *P* of a second solution corresponding to the first base sequence is 1. Alternatively, the first base sequence shown in Table 5 may be determined according to another method. A manner of determining the first base sequence shown in Table 5 is not specifically limited in this application.

Optionally, when the transmit end apparatus is the terminal device, before step S402, the network device may indicate the first base sequence to the transmit end apparatus by using signaling, so that the terminal device determines the first extension sequence, to determine the N second sequences based on the first extension sequence, determine the N first sequences based on the N second sequences, and then send the N1 first sequences in the N first sequences. The signaling may be RRC signaling or downlink control signaling (downlink control information, DCI).

For example, the first base sequence shown in Table 3, Table 4, or Table 5 may be preconfigured (or stored) in the transmit end apparatus. The network device may use 4-bit RRC signaling to indicate possible values of the 15 first base sequences shown in Table 4. For example, 15 possible values in 16 possible values of the 4 bits may be in one-to-one correspondence with the possible values of the 15 first base sequences shown in Table 4. The network device may send a specific value of the 4 bits to the transmit end apparatus. In this case, the first base sequence indicated by the network device is a first base sequence corresponding to the value. Alternatively, the network device may use 3-bit RRC signaling to indicate possible values of the eight first base sequences shown in Table 3, or use 1-bit RRC signaling to indicate the first base sequence shown in Table 5.

Alternatively, each first base sequence shown in Table 3, Table 4, or Table 5 may correspond to one index. For example, indexes of the first base sequences shown in rows from top to bottom in Table 3 may be 1 to 8 or 0 to 7. In this case, the network device may indicate, to the terminal device, an index corresponding to the first base sequence, and the terminal device may determine, based on the index indicated by the network device, the first base sequence corresponding to the index.

Optionally, all possible values of the first base sequence may be the first base sequence in one or more rows in Table 3, or may be the first base sequence in one or more rows in Table 4, or may be the first base sequence in Table 5.

Optionally, when the transmit end apparatus and the receive end apparatus are different apparatuses, before step S402, the transmit end apparatus may indicate the first base sequence to the receive end apparatus, so that the receive end apparatus determines the N1 first sequences sent by the transmit end apparatus or the N1 second sequences corresponding to the N1 first sequences, to process the first signal based on the N1 first sequences or the N1 second sequences.

For example, some or all of the first base sequences shown in Table 3, Table 4, or Table 5 may be preconfigured (or stored) in the transmit end apparatus and the receive end apparatus. The transmit end apparatus may use 3-bit signaling to indicate the possible values of the eight first base sequences shown in Table 3, or use 4-bit signaling to indicate the possible values of the 15 first base sequences shown in Table 4, or use 1-bit signaling to indicate the first base sequence shown in Table 5. For details, refer to the related descriptions of indicating the first base sequence by the network device to the terminal device. Details are not described herein again.

Optionally, in addition to the first base sequence shown in Table 3, Table 4, or Table 5, this application further provides two implementations of the first base sequence. In a first implementation, the length of the first base sequence is greater than 1, and the first base sequence is based on repetition of [1, -1].

In other words, when the length $N_{base}$ of the first base sequence is an even number, the first base sequence is obtained by sequentially splicing $N_{base}$/2 pieces of [1, -1]. When the length $N_{base}$ of the first base sequence is an odd number, the first base sequence is obtained by sequentially splicing ($N_{base}$ - 1)/2 pieces of [1, -1] and then splicing 1. For example, when $N_{base}$ = 6, the first base sequence may be [1, -1, 1, -1, 1, -1], and when $N_{base}$ = 7, the first base sequence may be [1, -1, 1, -1, 1, -1, 1].

Optionally, in this manner, the first base sequence based on repetition of [1, -1] may be properly transformed to obtain a new first base sequence. For example, each element in the first base sequence based on repetition of [1, -1] may be multiplied by a value *C*, to obtain a new first base sequence. *C* may be any value.

Optionally, when the length of the first sequence is an even number, and the first base sequence is based on repetition of [1, -1], the second solution of the equal sums of powers is also determinable based on the first base sequence.

In a second implementation, the first base sequence may be a PTM sequence.

According to the foregoing solution, because the second solution of the equal sums of powers is determinable based on the first base sequence, when the degree of the second solution is greater than or equal to 1, the spectral function corresponding to the first base sequence has a low ambiguity zone. Further, the first extension sequence determined based on the first base sequence may retain a property of the first base sequence, so that a solution (that is, the first solution) of the equal sums of powers can also be obtained based on the first extension sequence. In addition, the solution of the equal sums of powers has a larger degree, so that the spectral function corresponding to the first extension sequence has a larger low ambiguity zone, thereby improving detection performance.

Optionally, there may be the following two cases about a relationship between the first extension sequence and the first base sequence:

Case 1: The first extension sequence is the same as the first base sequence. In this case, the length of the first extension sequence is the same as the length of the first base sequence, and the degree of the second solution of the equal sums of powers is the same as the degree of the first solution of the equal sums of powers, that is, $Y = P$. Based on the case 1, after the first base sequence is determined, the first extension sequence can be determined without further calculation, so that calculation complexity can be reduced, and computing resource overheads of the transmit end apparatus can be reduced.

Case 2: The first extension sequence is determined based on the first base sequence and an offset sequence $T$. A length of the offset sequence is $M$, and $M$ is a positive integer.

Optionally, the length of the first extension sequence is related to the length of the first base sequence and an element in the offset sequence. For example, the three may satisfy the following relationship:

$$N = N_{base} + \sum_{m=0}^{M-1} t(m) \qquad (10)$$

$N$ is the length of the first extension sequence. $N_{base}$ is the length of the first base sequence. $t(m)$ represents an $m^{th}$ element in the offset sequence, that is, the offset sequence $T = [t(0), t(1), ..., t(M - 1)]$, and $t(m)$ is a positive integer.

For example, a possible implementation of the offset sequence may be shown in Table 6.

Table 6

| Length $M$ of an offset sequence | Offset sequence $T$ |
|---|---|
| 1 | [1], [2], [3], [4], [5], and [6] |
| 2 | [1, 1], [1, 2], [1, 3], [1, 4], [1, 5], [2, 2], [2, 3], and [2, 4] |
| 3 | [1, 1, 1], [1, 1, 2], [1, 1, 3], [1, 1, 4], [1, 2, 2], and [1, 2, 3] |
| 4 | [1, 1, 1, 1], [1, 1, 1, 2], [1, 1, 1, 3], and [1, 1, 2, 2] |
| 5 | [1, 1, 1, 1, 1] and [1, 1, 1, 1, 2] |
| 6 | [1, 1, 1, 1, 1, 1] |

Optionally, for a value of $M$, a possible value of the offset sequence may be some or all of a plurality of possible offset sequences corresponding to the value of $M$ in Table 6. For example, when the length $M$ of the offset sequence is equal to 1, the offset sequence may be one of the six possible offset sequences [1], [2], [3], [4], [5], and [6] corresponding to the length $M$ being 1 in Table 6.

Optionally, in the case 2, the degree $Y$ of the first solution of the equal sums of powers corresponding to the first extension sequence is equal to a sum of the degree $P$ of the second solution of the equal sums of powers corresponding to the first base sequence and the length $M$ of the offset sequence, that is, $Y = P + M$.

Optionally, the offset sequence may be used to extend the first base sequence, to obtain the first extension sequence. The length of the offset sequence may be understood as a quantity of times of extension. In addition, a later extension may be performed based on a previous extension result.

For example, the first base sequence may be extended based on the offset sequence in the following three manners, to obtain the first extension sequence.

Manner 1: The first base sequence is extended based on the offset sequence in a manner of splicing and summation.

Optionally, $t(m)$ 0s may be spliced after an $(m-1)^{th}$ intermediate sequence $s_{m-1}$ to obtain a sequence 1, an opposite sequence $-s_{m-1}$ of the $(m-1)^{th}$ intermediate sequence (where the opposite sequence includes an opposite number of each element in the $(m-1)^{th}$ intermediate sequence) may be spliced after the $t(m)$ 0s to obtain a sequence 2, and then the sequence 1 and the sequence 2 are summed to obtain an $m^{th}$ intermediate sequence $s_m$.

$m = 0,1, \dots , M$ - 1. When $m = 0$, a $-1^{st}$ intermediate sequence $s_{-1}$ is the same as the first base sequence $s_{base}$. When $m = M$ - 1, an $(M$ - 1$)^{th}$ intermediate sequence $s_{M-1}$ is the first extension sequence, that is, the $n^{th}$ element $s_{ext}(n)$ in the first extension sequence is the same as an $n^{th}$ element $s_{M-1}(n)$ in the intermediate sequence $s_{M-1}$.

For example, in the manner 1, $s_m$ satisfies the following relationship:

$$s_m = \left[s_{m-1}, \mathbf{0}_{1 \times t(m)}\right] + \left[\mathbf{0}_{1 \times t(m)}, -s_{m-1}\right], m = 0,1, \dots , M - 1$$

$s_{-1}$ is the same as the first base sequence, and $\mathbf{0}_{1 \times t(m)}$ represents a row vector (or referred to as an array) including $t(m)$ 0s. $s_m$ includes $N_{base} + \sum_{i=0}^{m} t(i)$ elements. $s_{-1}$ and $s_m$ are represented in a form of row vectors (or arrays).

For example, the amplitude of the first-type element is greater than 0 and the phase is 0 (that is, a value of the first-type element is greater than 0) and the first-type element corresponds to the sequence x in the GCP, the amplitude of the second-type element is greater than 0 and the phase is $\pi$ (that is, a value of the second-type element is less than 0) and the second-type element corresponds to the sequence y in the GCP, and the third value is equal to 0 and corresponds to a 0 sequence. It is assumed that the first base sequence $s_{base}$ = [1, -1, -1, 0, 1, 1, -1], $N_{base}$ = 7, P = 2, and the offset sequence $T$ = [1,2], that is, $M$ = 2. In this case:

When

$$m = 0, s_0 = [s_{-1}, \mathbf{0}_{1 \times 1}] + [\mathbf{0}_{1 \times 1}, -s_{-1}]$$
$$= [1, -1, -1, 0, 1, 1, -1, 0] + [0, -1, 1, 1, 0, -1, -1, 1]$$
$$= [1, -2, 0, 1, 1, 0, -2, 1].$$

When

$$m = 1, s_1 = [s_0, \mathbf{0}_{1 \times 2}] + [\mathbf{0}_{1 \times 2}, -s_0]$$
$$= [1, -2, 0, 1, 1, 0, -2, 1, 0, 0] + [0, 0, -1, 2, 0, -1, -1, 0, 2, -1]$$
$$= [1, -2, -1, 3, 1, -1, -3, 1, 2, -1].$$

That is, the first extension sequence $s_{ext}$ is [1, -2, -1, 3, 1, -1, -3, 1, 2, -1] (the same as $s_1$). In this case, the length $N$ of the first extension sequence $= N_{base} + \sum_{m=0}^{M-1} t(m) = 10$ and the degree $Y$ of the first solution $= P + M = 4$.

Manner 2: The first base sequence is extended based on the offset sequence in a manner of sequence shift and difference calculation.

Optionally, a difference between an $i^{th}$ element in a sequence 1 and an $i^{th}$ element in a sequence 2 may be used as an $i^{th}$ element in an $m^{th}$ intermediate sequence. The sequence 1 is an $(m-1)^{th}$ intermediate sequence $s_{m-1}$, and the sequence 2 is a sequence obtained by shifting the $(m-1)^{th}$ intermediate sequence $s_{m-1}$ to the right by $t(m)$ bits.

$m = 0,1, \dots , M$ - 1. When $m = 0$, a $-1^{st}$ intermediate sequence $s_{-1}$ is the same as the first base sequence $s_{base}$. When $m = M$ - 1, an $(M$ - 1$)^{th}$ intermediate sequence $s_{M-1}$ is the first extension sequence, that is, the $n^{th}$ element $s_{ext}(n)$ in the first extension sequence is the same as an $n^{th}$ element $s_{M-1}(n)$ in the intermediate sequence $s_{M-1}$.

For example, in the manner 2, $s_m$ satisfies the following relationship:

$$s_m(i) = s_{m-1}(i) - s_{m-1}\big(i - t(m)\big), m = 0,1, \dots , M - 1$$

$s_{-1}$ is the same as the first base sequence, and $s_m$ includes $N_{base} + \sum_{j=0}^{m} t(j)$ elements, that is,

$i = 0, 1, \ldots, N_{base} + \sum_{j=0}^{m} t(j) - 1$. $s_{-1}$ and $s_m$ are represented in a form of row vectors (or arrays).

When $i \geq N_{base} + \sum_{j=0}^{m-1} t(j)$, $s_{m-1}(i) = 0$; and when $i - t(m) < 0$, $s_{m-1}(i - t(m)) = 0$.

Manner 3: The first base sequence is extended based on the offset sequence in a manner of sequence-based difference calculation and splicing.

Optionally, the nth element in the first extension sequence is a difference between a first quantity and a second quantity. The first quantity is a quantity of elements whose values are n in a sequence $A_{M-1}$, the second quantity is a quantity of elements whose values are n in a sequence $B_{M-1}$, and $n = 0, 1, \ldots, N - 1$.

Optionally, each element in the intermediate sequence $B_{m-1}$ may be added with $t(m)$ and then spliced after the intermediate sequence $A_{m-1}$ to obtain an intermediate sequence $A_m$. Each element in the intermediate sequence $A_{m-1}$ is added with $t(m)$ and then spliced after the intermediate sequence $B_{m-1}$ to obtain an intermediate sequence $B_m$. $m = 0, 1, \ldots, M - 1$. When $m = M - 1$, an $(M - 1)$[th] intermediate sequence is the sequence $A_{M-1}$, and the $(M - 1)$[th] intermediate sequence is the sequence $B_{M-1}$.

For example, the sequence $A_m$ and the sequence $B_m$ satisfy:

$$A_m = [A_{m-1}, B_{m-1} + t(m)], m = 0, 1, \ldots, M - 1$$

$$B_m = [B_{m-1}, A_{m-1} + t(m)], m = 0, 1, \ldots, M - 1$$

$A_{-1}$ is a sequence including $q_{base,1}(i) l_{base,1}(i)$s, $i = 0, 1, \ldots, N_{base,1} - 1$, $B_{-1}$ is a sequence including $q_{base,2}(j) l_{base,2}(j)$s, and $j = 0, 1, \ldots, N_{base,2} - 1$. $A_{-1}$, $A_m$, $B_{-1}$, and $B_m$ are represented in a form of row vectors (or arrays).

$q_{base,1}(i)$ represents the ith element in the first weight sequence, and $l_{base,1}(i)$ represents the ith element in the first index sequence. $q_{base,2}(j)$ represents the jth element in the second weight sequence, and $l_{base,2}(j)$ represents the jth element in the second index sequence. The first weight sequence, the first index sequence, the second weight sequence, and the second index sequence are determined based on the first base sequence. For details, refer to the foregoing related descriptions. Details are not described herein again.

For example, possible implementations of the sequence $A_{-1}$ and the sequence $B_{-1}$ may be shown in Table 7.

Table 7

| Sequence $A_{-1}$ | Sequence $B_{-1}$ |
|---|---|
| [0, 2] | [1, 1] |
| [0, 3] | [1, 2] |
| [0, 3, 3] | [1, 1, 4] |
| [0, 4, 5] | [1, 2, 6] |
| [0, 4, 7, 11] | [1, 2, 9, 10] |
| [0, 4, 8, 16, 17] | [1, 2, 10, 14, 18] |
| [0, 6, 8, 17, 19] | [1, 3, 12, 14, 20] |
| [0, 5, 6, 16, 17, 22] | [1, 2, 10, 12, 20, 21] |

Optionally, the sequence $A_{-1}$ and the sequence $B_{-1}$ that are in the qth row shown in Table 7 may be determined based on the first base sequence in the qth row shown in Table 3, or may be determined in another manner. This is not specifically limited in this application.

For example, the amplitude of the first-type element is greater than 0 and the phase is 0 (that is, a value of the first-type element is greater than 0) and the first-type element corresponds to the sequence x in the GCP, the amplitude of the second-type element is greater than 0 and the phase is $\pi$ (that is, a value of the second-type element is less than 0) and the second-type element corresponds to the sequence y in the GCP, and the third value is equal to 0 and corresponds to a 0 sequence. It is assumed that the first base sequence $s_{base} = [1, -2, 0, 2, -1]$, $N_{base} = 5$, $P = 2$, and the offset sequence $T = [1,3]$, that is, $M = 2$. In this case, $l_{base,1} = [0, 3]$, $l_{base,2} = [1, 4]$, $q_{base,1} = [1, 2]$, and $q_{base,2} = [2, 1]$. $A_{-1} = [0, 3, 3]$, and $B_{-1} = [1, 1, 4]$. In this scenario:

When $m = 0$, $A_0 = [A_{-1}, B_{-1} + 1] = [0, 3, 3, 2, 2, 5]$ , and $B_0 = [B_{-1}, A_{-1} + 1] = [1,1,4,1,4,4]$.

When $m = 1$, $A_1 = [A_0, B_0 + 3] = [0, 3, 3, 2, 2, 5, 4, 4, 7, 4, 7, 7]$, and $B_1 = [B_0, A_0 + 3] = [1, 1, 4,1, 4, 4,3,6,6,5,5, 8]$.

Based on $A_1$ and $B_1$ in this example, when the nth element in the first extension sequence is the difference between the first quantity and the second quantity, $n = 0,1, ... , N - 1$, the first quantity is a quantity of elements whose values are n in the sequence $A_1$, and the second quantity is a quantity of elements whose values are n in the sequence $B_1$, the first extension sequence is $s_{ext}$ = [1, -3, 2, 1, 0, -1, -2, 3, -1].

Optionally, for the given first base sequence and offset sequence, first extension sequences determined in the manner 1, manner 2, and manner 3 are the same. That is, the manner 1, manner 2, or manner 3 may be understood as different implementations or different descriptions of a same relationship.

Optionally, the transmit end apparatus and the receive end apparatus are different apparatuses, and the first extension sequence and the first base sequence meet the foregoing case 2. Before step S402, the transmit end apparatus may indicate the first base sequence and the offset sequence to the receive end apparatus, so that the receive end apparatus can determine the first extension sequence based on the first base sequence and the offset sequence, to determine the N1 first sequences sent by the transmit end apparatus or the N1 second sequences corresponding to the N1 first sequences, and process the first signal based on the N1 first sequences or the N1 second sequences. For example, for an indication manner of the first base sequence, refer to the foregoing related descriptions. For an indication manner of the offset sequence, refer to the indication manner of the first base sequence. Details are not described herein again.

Based on the foregoing manner 1, manner 2, or manner 3, the first extension sequence determined based on the first base sequence may retain a property of the first base sequence, so that a solution (that is, the first solution) of the equal sums of powers can also be obtained based on the first extension sequence. In addition, the solution of the equal sums of powers has a larger degree (that is, $P+M$), so that the spectral function corresponding to the first extension sequence has a larger low ambiguity zone, thereby improving detection performance. In addition, for requirements for different low ambiguity zone sizes or low ambiguity zone thresholds, different offset sequences and/or different first base sequences may be flexibly selected, to determine a first extension sequence that meets the requirement, thereby improving a degree of freedom in designing an extension sequence.

In addition, this embodiment of this application provides the foregoing three manners used to determine the first extension sequence based on the first base sequence. During actual application, any manner may be flexibly selected based on a requirement or a capability of the transmit end apparatus to determine the first extension sequence. This has high flexibility and wide applicability.

Optionally, the first extension sequence shown in Table 1, Table 2, or the relationship (A) may be determined based on the manner 1, manner 2, or manner 3, or may be determined in another manner. A manner of determining the first extension sequence is not specifically limited in this application.

For example, when the first extension sequence shown in the relationship (A) is determined based on the foregoing manner 1, manner 2, or manner 3, the length of the first base sequence based on which the first extension sequence is generated is an even number greater than 3, the first base sequence is based on repetition of [1, -1], and the offset sequence $T$ = [1, 1].

For example, when the length of the first base sequence is 6 (that is, the first base sequence is [1, -1, 1, -1, 1, -1]), and the offset sequence $T$ = [1, 1], a corresponding first extension sequence is [1, -3, 4, -4, 4, -4, 3, -1].

When the length of the first base sequence is 8 (that is, the first base sequence is [1, - 1, 1, -1, 1, -1, 1, -1]), and the offset sequence $T$ = [1, 1], a corresponding first extension sequence is [1, -3, 4, -4, 4, -4, 4, -4, 3, -1].

When the length of the first base sequence is 10 (that is, the first base sequence is [1, - 1, 1, -1, 1, -1, 1, -1, 1, -1]), and the offset sequence $T$ = [1, 1], a corresponding first extension sequence is [1, -3, 4, -4, 4, -4, 4, -4, 4, -4, 3, -1].

In addition, when the length of the first base sequence is 10 (that is, the first base sequence is [1, -1, 1, -1, 1, -1, 1, -1, 1, -1]), and the offset sequence $T$ = [1, 1, 1], a corresponding first extension sequence is [1, -4, 7, -8, 8, -8, 8, -8, 8, -8, 7, -4, 1].

For example, when the first extension sequence shown in Table 1 is determined based on the manner 1, manner 2, or manner 3, the first base sequence based on which the first extension sequence is generated and the offset sequence may be shown in Table 8.

Table 8

| Length of a first extension sequence | First base sequence $s_{base}$ | Offset sequence $T$ | First extension sequence $s_{ext}$ |
|---|---|---|---|
| 14 | [1, -1, -1, 0, 1, 1, -1] | [7] | [1, -1, -1, 0, 1, 1, -1, -1, 1, 1, 0, -1, -1, 1] |
| 28 | [1, -1, -1, 0, 1, 1, -1] | [7, 14] | [1, -1, -1, 0, 1, 1, -1, -1, 1, 1, 0, -1, -1, 1, -1, 1, 1, 0, -1, -1, 1, 1, -1, -1, 0, 1, 1, -1] |

(continued)

| Length of a first extension sequence | First base sequence $s_{base}$ | Offset sequence $T$ | First extension sequence $s_{ext}$ |
|---|---|---|---|
| 56 | [1, -1, -1, 0, 1, 1, -1] | [7, 14, 28] | [1, -1, -1, 0, 1, 1, -1, -1, 1, 1, 0, -1, -1, 1, -1, 1, 1, 0, -1, -1, 1, 1, -1, -1, 0, 1, 1, -1, -1, 1, 1, 0, - 1, -1, 1, 1, -1, -1, 0, 1, 1, -1, 1, -1, - 1, 0, 1, 1, -1, -1, 1, 1, 0, -1, -1, 1] |
| 24 | [1, -1, -1, 0, 1, 0, 0, 1, 0, - 1, -1, 1] | [12] | [1, -1, -1, 0, 1, 0, 0, 1, 0, -1, -1, 1, -1, 1, 1, 0, -1, 0, 0, -1, 0, 1, 1, -1] |
| 48 | [1, -1, -1, 0, 1, 0, 0, 1, 0, - 1, -1, 1] | [12, 24] | [1, -1, -1, 0, 1, 0, 0, 1, 0, -1, -1, 1, -1, 1, 1, 0, -1, 0, 0, -1, 0, 1, 1, -1, -1, 1, 1, 0, -1, 0, 0, -1, 0, 1, 1, -1, 1, -1, -1, 0, 1, 0, 0, 1, 0, -1, -1, 1] |
| 38 | [1, -1, -1, 0, 1, 0, 0, 0, 1, 0, -1, 0, 0, 0, -1, 0, 1, 1, -1] | [19] | [1, -1, -1, 0, 1, 0, 0, 0, 1, 0, -1, 0, 0, 0, -1, 0, 1, 1, -1, -1, 1, 1, 0, -1, 0, 0, 0, -1, 0, 1, 0, 0, 0, 1, 0, - 1, -1, 1] |
| 42 | [1, -1, 0, -1, 0, 0, 1, 0, 1, 0, 0, 0, -1, 0, -1, 0, 0, 1, 0, 1, - 1] | [21] | [1, -1, 0, -1, 0, 0, 1, 0, 1, 0, 0, 0, -1, 0, -1, 0, 0, 1, 0, 1, -1, -1, 1, 0, 1, 0, 0, -1, 0, -1, 0, 0, 0, 1, 0, 1, 0, 0, -1, 0, -1, 1] |
| 46 | [1, -1, -1, 0, 0, 1, 1, 0, 0, 0, -1, 0, -1, 0, 0, 0, 1, 1, 0, 0, - 1, -1, 1] | [23] | [1, -1, -1, 0, 0, 1, 1, 0, 0, 0, -1, 0, -1, 0, 0, 0, 1, 1, 0, 0, -1, -1, 1, -1, 1, 1, 0, 0, -1, -1, 0, 0, 0, 1, 0, 1, 0, 0, 0, -1, -1, 0, 0, 1, 1, -1] |

For example, when the first extension sequence shown in Table 2 is determined based on the manner 1, manner 2, or manner 3, the first base sequence based on which the first extension sequence is generated and the offset sequence may be shown in Table 9.

Table 9

| Length of a first extension sequence | First base sequence $s_{base}$ | Offset sequence $T$ | First extension sequence $s_{ext}$ |
|---|---|---|---|
| 9 | [1, -1, -1, 0, 1, 1, -1] | [2] | [1, -1, -2, 1, 2, 1, -2, -1, 1] |
| 10 | [1, -1, -1, 0, 1, 1, -1] | [3] | [1, -1, -1, -1, 2, 2, -1, -1, -1, 1] |
| 10 | [1, -1, -1, 0, 1, 1, -1] | [1, 2] | [1, -2, -1, 3, 1, -1, -3, 1, 2, -1] |
| 8 | [1, -1, -1, 1, 1, -1] | [1, 1] | [1, -3, 2, 2, -2, -2, 3, -1] |
| 10 | [1, -1, -1, 1, 1, -1, -1, 1] | [1, 1] | [1, -3, 2, 2, -2, -2, 2, 2, -3, 1] |
| 12 | [1, -1, -1, 1, 1, -1, -1, 1, 1, -1] | [1, 1] | [1, -3, 2, 2, -2, -2, 2, 2, -2, -2, 3, -1] |
| 14 | [1, -1, -1, 1, 1, -1, -1, 1, 1, -1, -1, 1] | [1, 1] | [1, -3, 2, 2, -2, -2, 2, 2, -2, -2, 2, 2, -3, 1] |
| 14 | [1, -1, -1, 1, 1, -1, 1, -1, -1, 1, 1, -1] | [1, 1] | [1, -3, 2, 2, 2, -2, 4, -4, 2, 2, 2, 2, 3, -1] |
| 16 | [1, -1, -1, 1, 1, -1, -1, 1, 1, -1, -1, 1, 1, -1] | [1, 1] | [1, -3, 2, 2, -2, -2, 2, 2, -2, -2, 2, 2, -2, -2, 3, -1] |
| 18 | [1, -1, -1, 1, 1, -1, -1, 1, 1, -1, -1, 1, 1, -1, -1, 1] | [1, 1] | [1, -3, 2, 2, -2, -2, 2, 2, -2, -2, 2, 2, -2, -2, 2, 2, -3, 1] |
| 19 | [1, -1, -1, 1, 1, -1, 1, -1, -1, 1, 1, -1, 1, -1, -1, 1, 1, -1] | [1] | [1, 2, 0, 2, 0, 2, 2, 0, 2, 0, 2, 2, 2, 0, 2, 0, -2, 1] |
| 20 | [1, -1, -1, 1, 1, -1, -1, 1, 1, -1, -1, 1, 1, -1, -1, 1, 1, -1] | [1, 1] | [1, -3, 2, 2, -2, -2, 2, 2, -2, -2, 2, 2, -2, -2, 2, 2, -2, -2, 3, -1] |

(continued)

| Length of a first extension sequence | First base sequence $s_{base}$ | Offset sequence $T$ | First extension sequence $s_{ext}$ |
|---|---|---|---|
| 20 | [1, -1, -1, 1, 1, -1, -1, 1, 1, -1, -1, 1, 1, -1, -1, 1, 1, -1] | [1, 1] | [1, -3, 2, 2, -2, -2, 4, -4, 2, 2, -2, -2, 4, -4, 2, 2, -2, -2, 3, -1] |

Optionally, the first extension sequence may be properly transformed to obtain a new extension sequence. For example, each element in the first extension sequence shown above may be multiplied by a value $D$, to obtain a new extension sequence. $D$ may be any non-zero value.

Based on the foregoing example, when amplitudes of elements in the first extension sequence are the same, a signal-to-noise ratio (signal-to-noise ratio, SNR) loss on a receive side is low. When amplitudes of elements in the first extension sequence are not completely the same, a low ambiguity zone of the spectral function corresponding to the first extension sequence is large. Therefore, the first extension sequence may be flexibly selected based on an actual requirement. For example, when a specific SNR loss is allowed, a first extension sequence whose element amplitudes are not completely the same may be selected, to increase a low ambiguity zone, thereby improving detection performance. When a large SNR is expected, a first extension sequence whose element amplitudes are the same may be selected, to improve the SNR, thereby improving detection performance.

In addition, based on the foregoing example, first extension sequences of different lengths may correspond to different first base sequences and offset sequences. In other words, a proper first base sequence and offset sequence may be selected based on the length of the first extension sequence, so that performance of the spectral function corresponding to the first extension sequence is as optimal as possible. First extension sequences of a same length may correspond to different first base sequences and offset sequences, so that different performance requirements can be met.

For example, the first extension sequence whose length is 20 shown in Table 9 is used as an example. When the first base sequence is [1, -1, -1, 1, 1, -1, -1, 1, 1, -1, -1, 1, 1, -1, -1, 1, 1, -1], the offset sequence is [1, -1], and the first extension sequence is [1, -3, 2, 2, -2, -2, 2, 2, - 2, -2, 2, 2, -2, -2, 2, 2, -2, -2, 3, -1], a spectral function that is of the first extension sequence and that is obtained according to the formula (2) is shown in FIG. 5. A vertical coordinate is energy (or a value) of the spectral function, and is in a unit of dB. A horizontal coordinate is $2v/N$, where $-N/2 \leq v \leq N/2$, and v is a real number.

For example, a threshold is -35 dB. It can be learned from FIG. 5 that a zone in which energy of the spectral function is less than or equal to -35 dB exists near a value of the horizontal coordinate being 0, in other words, a low ambiguity zone exists near the value of the horizontal coordinate being 0. It can be learned from FIG. 5 and FIG. 1b that, compared with the solution in which the plurality of sequences are determined based on the PTM sequence, the solution in this application can be used to generate a larger low ambiguity zone, to improve the detection performance. In addition, in comparison with the PTM solution corresponding to FIG. 1b, a quantity of sent sequences may be reduced while the detection performance is improved (where a quantity of sequences in the PTM solution corresponding to FIG. 1b is 32, and a quantity of sequences that corresponds to FIG. 5 is 20), to save resources. When the horizontal coordinate is 0, it indicates that a value of v is 0. When v is 0, it indicates that a Doppler domain discrete index is 0, and further indicates that a corresponding moving speed of a target is 0, or indicates that the target is still.

It may be understood that, in FIG. 5, the low ambiguity zone generated according to the solution of this application is described merely by using the example in which $N$ is equal to 20, and the first extension sequence is the first extension sequence when $N = 20$ in Table 9. For the first extension sequence in the other rows in Table 1, Table 2, Table 8, or Table 9, for a same low ambiguity zone threshold and an approximate quantity of sequences (where for example, the quantity of sequences in the PTM solution is a power of 2, and the quantity of sequences is a minimum value not less than $N$), a larger low ambiguity zone may be generated in comparison with the PTM solution, or a smaller quantity of sequences may be sent to generate a low ambiguity zone in a similar size in the solution of this application in comparison with the PTM solution.

The foregoing describes designs of the first extension sequence and the first base sequence, and the following describes sending of the first sequence in detail.

For transmit powers of the N first sequences:

In some implementation scenarios, if amplitudes of non-zero values of the first extension sequences are not completely the same, a power of the $n^{th}$ first sequence in the N first sequences is determined based on the amplitude $|s_{ext}(n)|$ of the $n^{th}$ element in the first extension sequence.

In a possible implementation, a ratio of the power of the $n^{th}$ first sequence in the N first sequences to a power of an $n'^{th}$ first sequence in the N first sequences is equal to $|s_{ext}(n)|/|s_{ext}(n')|$. n and $n'$ are any integer from 0 to N-1, and $n \neq n'$. $|s_{ext}(n)|$ is the amplitude of the $n^{th}$ element in the first extension sequence, $|s_{ext}(n')|$ is an amplitude of the $n'^{th}$ element in the first extension sequence, and $|s_{exe}(n')| \neq 0$.

Optionally, in this possible implementation, each element in the $n^{th}$ second sequence in the N second sequences may be multiplied by $\sqrt{|\boldsymbol{s}_{ext}(n)|}$ to obtain a new $n^{th}$ second sequence, and then the $n^{th}$ first sequence is determined based on the new $n^{th}$ second sequence, so that the ratio of the power of the $n^{th}$ first sequence to the power of the $n'^{th}$ first sequence is equal to $|\boldsymbol{s}_{ext}(n)|/|\boldsymbol{s}_{ext}(n')|$. A relationship between the second sequence and the first sequence is described in a subsequent embodiment. Details are not described herein.

In another possible implementation, a ratio of the power of the $n^{th}$ first sequence in the N first sequences to a power of an $n'^{th}$ first sequence in the N first sequences is equal to $[\boldsymbol{s}_{ext}(n)]^2/[\boldsymbol{s}_{ext}(n')]^2$. n and n' are any integer from 0 to N-1, and $n \neq n'$. $\boldsymbol{s}_{ext}(n)$ is the $n^{th}$ element in the first extension sequence, $\boldsymbol{s}_{ext}(n')$ is the $n'^{th}$ element in the first extension sequence, and $\boldsymbol{s}_{ext}(n') \neq 0$.

Optionally, in this possible implementation, each element in the $n^{th}$ second sequence in the N second sequences may be multiplied by $|\boldsymbol{s}_{ext}(n)|$ to obtain a new $n^{th}$ second sequence, and then the $n^{th}$ first sequence is determined based on the new $n^{th}$ second sequence, so that the ratio of the power of the $n^{th}$ first sequence to the power of the $n'^{th}$ first sequence is equal to $[\boldsymbol{s}_{ext}(n)]^2/[\boldsymbol{s}_{ext}(n')]^2$. A relationship between the second sequence and the first sequence is described in a subsequent embodiment. Details are not described herein.

In some other implementation scenarios, if amplitudes of non-zero values of the first extension sequence are not completely the same, transmit powers of the N first sequences may be the same. In this case, the receive end apparatus processes the received $n^{th}$ first sequence based on the amplitude $|\boldsymbol{s}_{ext}(n)|$ of the $n^{th}$ element in the first extension sequence.

In a possible implementation, a ratio of a receive power of the $n^{th}$ first sequence in the N first sequences to a receive power of an $n'^{th}$ first sequence in the N first sequences is equal to $|\boldsymbol{s}_{ext}(n)|/|\boldsymbol{s}_{ext}(n')|$. n and n' are any integer from 0 to N-1, and $n \neq n'$. $|\boldsymbol{s}_{ext}(n)|$ is the amplitude of the $n^{th}$ element in the first extension sequence, $|\boldsymbol{s}_{ext}(n')|$ is an amplitude of the $n'^{th}$ element in the first extension sequence, and $|\boldsymbol{s}_{ext}(n')| \neq 0$.

Optionally, in this possible implementation, the receive end apparatus may multiply the received $n^{th}$ first sequence by $\sqrt{|\boldsymbol{s}_{ext}(n)|}$ to obtain a new $n^{th}$ first sequence, and then perform detection based on the new $n^{th}$ first sequence, so that the ratio of the receive power of the received $n^{th}$ first sequence to the receive power of the received $n'^{th}$ first sequence is equal to $|\boldsymbol{s}_{ext}(n)|/|\boldsymbol{s}_{ext}(n')|$.

In another possible implementation, a ratio of a receive power of the $n^{th}$ first sequence in the N first sequences to a receive power of an $n'^{th}$ first sequence in the N first sequences is equal to $[\boldsymbol{s}_{ext}(n)]^2/|\boldsymbol{s}_{ext}(n')]^2$. n and n' are any integer from 0 to N-1, and $n \neq n'$. $\boldsymbol{s}_{ext}(n)$ is the $n^{th}$ element in the first extension sequence, $\boldsymbol{s}_{ext}(n')$ is the $n'^{th}$ element in the first extension sequence, and $\boldsymbol{s}_{ext}(n') \neq 0$.

Optionally, in this possible implementation, the receive end apparatus may multiply the received $n^{th}$ first sequence by $|\boldsymbol{s}_{ext}(n)|$ to obtain a new $n^{th}$ first sequence, and then perform detection based on the new $n^{th}$ first sequence, so that the ratio of the receive power of the received $n^{th}$ first sequence to the receive power of the received $n'^{th}$ first sequence is equal to $[\boldsymbol{s}_{ext}(n)]^2/|\boldsymbol{s}_{ext}(n')]^2$.

According to this solution, when the amplitudes of the non-zero values of the first extension sequence are not completely the same, the power for sending the N first sequences by the transmit end apparatus or the receive power for receiving the N first sequences by the receive end apparatus may be determined based on the amplitudes of the elements in the first extension sequence, so that a property of the first extension sequence including the first solution of the equal sums of powers is not affected, and a low ambiguity zone of the spectral function corresponding to the first extension sequence maintains good performance, thereby improving detection performance.

For time domain positions of the N1 first sequences:

Optionally, the N1 first sequences are mapped and sent in time domain. That the transmit end apparatus outputs the N1 first sequences includes: The transmit end apparatus sequentially sends the N1 first sequences in N1 first time units in N consecutive time units.

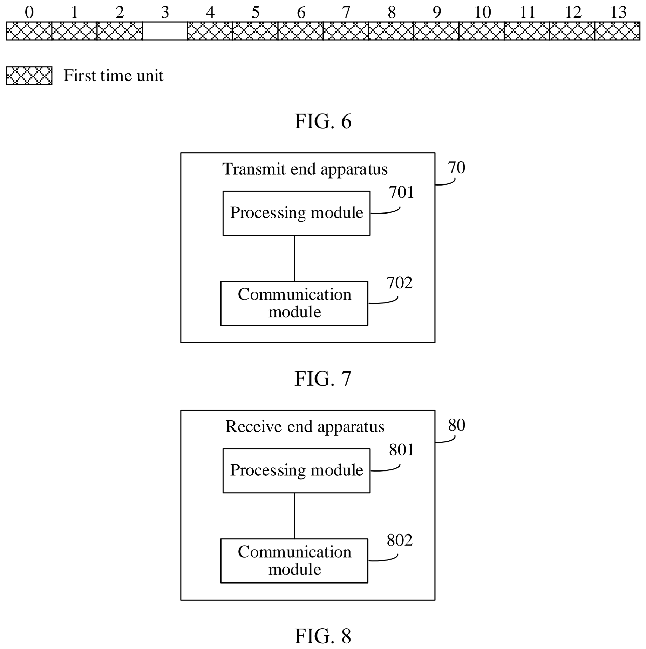

Optionally, positions (or indexes) of the N1 first time units in the N time units are the same as positions (or indexes) of the N1 first sequences in the N first sequences. For example, N=14, and the first extension sequence is [1, -1, -1, 0, 1, 1, -1, -1, 1, 1, 0, -1, -1, 1]. The N1 first sequences are $0^{th}$, $1^{st}$, $2^{nd}$, $4^{th}$, $5^{th}$, $6^{th}$, $7^{th}$, $8^{th}$, $9^{th}$, $11^{th}$, $12^{th}$ and $13^{th}$ first sequences in the 14 first extension sequences. In this case, as shown in FIG. 6, the N1 first time units are $0^{th}$, $1^{st}$, $2^{nd}$, $4^{th}$, $5^{th}$, $6^{th}$, $7^{th}$, $8^{th}$, $9^{th}$, $11^{th}$, $12^{th}$ and $13^{th}$ time units in the 14 consecutive time units.

Optionally, the time unit may be a consecutive period of time or a segment of consecutive time domain resources. A time domain signal may be converted into a frequency domain signal through a Fourier transform, in other words, a time domain signal sent on a segment of time domain resources may be converted into a frequency domain signal. Therefore, this may also mean: A segment of consecutive time domain resources corresponds to a segment of frequency domain resources. Further, the time domain resources and the frequency domain resources corresponding to the time domain resources may be collectively referred to as time-frequency resources.

Optionally, one time unit may include at least one symbol. The symbol may be a single-carrier (single-carrier) symbol, a single-carrier quadrature amplitude modulation (single-carrier quadrature amplitude modulation, SC-QAM) symbol, or a single-carrier frequency division multiple access (single-carrier frequency division multiple access, SC-FDMA) symbol.

Optionally, duration (or referred to as a time length) of one time unit may be represented as $L_{unit} \times P \times T_s$. $T_s$ represents a unit of time (or referred to as a sampling interval). $T_s$ may be determined based on a subcarrier spacing. For example, when the subcarrier spacing is 15 kilohertz (kHz), $T_s$ may be $1/(2048 \times 15000)$ second (s). $P$ is a positive integer. For example, $P$ may be 1 or 2. For example, $P$ may be understood as an upsampling multiple.

$L_{unit}$ may be understood as a quantity of discrete points (or referred to as sampling points) in the time unit, and a time interval between any two adjacent discrete points is $P \times T_s$. In other words, $L_{unit}$ discrete points (or discrete time domain positions) may be obtained by dividing (or sampling) the time unit at an interval of $P \times T_s$.

Optionally, a value of $L_{unit}$ may be greater than or equal to a length of a sequence to be sent in the time unit. In addition, $L_{unit}$ may also be referred to as a length of the time unit. In other words, in embodiments of this application, the duration of the time unit may be a continuous time length, and the length of the time unit may be the quantity of discrete points. That the length of the time unit is $L_{unit}$ may also be understood as: $L_{unit}$ discrete values may be sent in the time unit.

Optionally, when a length of a time unit is $L_{unit}$, the time unit may include $L_{unit}$ single-carrier symbols or $L_{unit}$ SC-QAM symbols. One value (for example, one complex value) may be sent on each single-carrier symbol or each SC-QAM symbol. Duration of each single-carrier symbol or each SC-QAM symbol is $P \times T_s$. Alternatively, when a length of a time unit is $L_{unit}$, the time unit may include at least one SC-FDMA symbol.

Optionally, total duration of the N consecutive time units may be $\sum_{n=0}^{N-1} L_n^{unit} \times P \times T_s$. $\sum_{n=0}^{N-1} L_n^{unit}$ values may be obtained by sampling time domain signals in the N consecutive time units at an interval of $PT_s$, and $\sum_{n=0}^{N-1} L_n^{unit}$ may be understood as a total length of the N consecutive time units.

Optionally, the transmit end apparatus may send the $n$'th first sequence in the N1 first sequences in an $n$'th first time unit in the N1 first time units. In other words, one first sequence is sent in one first time unit, and the N1 first time units are in one-to-one correspondence with the N1 first sequences.

Optionally, the transmit end apparatus may generate an $n$'th second signal based on the $n$'th first sequence in the N1 first sequences (where the second signal is a time-domain continuous signal), and the $n$'th second signal is sent in the $n$'th first time unit. In other words, a second signal generated based on one first sequence is sent in one first time unit, and the N1 first time units are in one-to-one correspondence with the N1 second signals generated based on the N1 first sequences.

Optionally, lengths (or duration) of all the N time units are equal. The length of each time unit is greater than or equal to the length of the first sequence, or the duration of each time unit is greater than or equal to duration of the second signal generated based on the first sequence.

Optionally, the $n$'th first sequence in the N1 first sequences is mapped starting from a start position of the $n$'th first time unit in the N1 first time units. Certainly, the mapping may alternatively start from another position in the first time unit, provided that the $n$'th first sequence is completely mapped in the $n$'th first time unit. This is not specifically limited in this application. For example, an end mapping position (or referred to as an end time domain position) of the $n$'th first sequence may be the same as an end position in the $n$'th first time unit.

Optionally, a time domain position of a first sequence may be a start time domain position of the first sequence, an end time domain position of the first sequence, or a time domain position of a specific intermediate element (a specific element other than a $0$th element and an $(L_1 - 1)$th element) in the first sequence. This is not specifically limited in this application.

Optionally, when a time domain position of the $n$'th first sequence is a start time domain position of the $n$'th first sequence, the start time domain position may be the start position of the $n$'th first time unit. In other words, the $n$'th first sequence in the N1 first sequences is mapped starting from the start position of the $n$'th first time unit in the N1 first time units.

For example, when all positions of the N consecutive time units whose total length is $\sum_{n=0}^{N-1} L_n^{unit}$ are numbered from 0 to $\sum_{n=0}^{N-1} L_n^{unit} - 1$, a start time domain position of the $n$th first sequence in the N first sequences is $\sum_{i=-1}^{n-1} L_i^{unit}$, where $L_{-1}^{unit} = 0$. Then, the start time domain position of the $n$'th first sequence in the N1 first sequences may be determined based on the positions (or indexes) of the N1 first sequences in the N first sequences.

Alternatively, for example, a ratio of the start time domain position of the $n$th first sequence in the N first sequences to the length of the first sequence may be an $n$th element in a first position relationship sequence, and the $n$th element in the first position relationship sequence satisfies:

$$I_1(n) = \sum_{i=-1}^{n-1} L_i^{unit} / L_1$$

$L_1$ is the length of the first sequence. It may be understood that when a length $L_n^{unit}$ of an nth time unit is the same as the length of the first sequence, $I_1(n)$ = n. After the start time domain position of the nth first sequence in the N first sequences is determined based on the foregoing relationship, the start time domain position of the n'th first sequence in the N1 first sequences can be determined based on the positions (or indexes) of the N1 first sequences in the N first sequences.

Optionally, when the time domain position of the n'th first sequence is an end time domain position of the n'th first sequence, the end time domain position may be the end position of the n'th first time unit. In other words, the end time domain position of the n'th first sequence in the N1 first sequences is the same as the end position of the n'th first time unit.

For example, when all positions of the N consecutive time units whose total length is $\sum_{n=0}^{N-1} L_n^{unit}$ are numbered from 0 to $\sum_{n=0}^{N-1} L_n^{unit} - 1$, an end time domain position of the nth first sequence in the N first sequences is $\sum_{i=0}^{n-1} L_i^{unit}$. Then, the end time domain position of the n'th first sequence in the N1 first sequences may be determined based on the positions (or indexes) of the N1 first sequences in the N first sequences.

In the foregoing solution, the nth first sequence in the N first sequences is determined based on the nth second sequence in the N second sequences. The following describes a relationship between the nth first sequence and the nth second sequence. Optionally, the nth first sequence and the nth second sequence satisfy one of the following four relationships:

Relationship 1: The nth first sequence and the nth second sequence are the same.

For example, if the nth second sequence is the sequence x in the GCP, the nth first sequence is also the sequence x in the GCP. If the nth second sequence is the sequence y in the GCP, the nth first sequence is also the sequence y in the GCP. In addition, in this scenario, the first sequence and the second sequence have a same length.

Based on the relationship 1, the nth first sequence and the nth second sequence are the same, and there is no need to perform correlation calculation on the second sequence to obtain the first sequence, so that implementation complexity at a transmit end can be reduced.

Relationship 2: The nth first sequence is obtained by splicing the nth second sequence and at least one 0.

It may be understood that, in this scenario, the length $L_1$ of the first sequence is greater than the length $L_2$ of the second sequence. A quantity of 0s in the first sequence is $L_1 - L_2$.

Optionally, at least one 0 may be spliced at the beginning and/or the end of the nth second sequence to obtain the nth first sequence. For example, at least one 0 is spliced at the end of the second sequence. When the second sequence is the sequence x or the sequence y in the GCP, the first sequence may be respectively represented by the following formulas:

$$d_{1,n}(i) = \begin{cases} x(i) & , i = 0,1,\dots,L_2-1 \\ 0 & , i = L_2, L_2+1, \dots, L_1-1 \end{cases}$$

$$d_{1,n}(i) = \begin{cases} y(i) & , i = 0,1,\dots,L_2-1 \\ 0 & , i = L_2, L_2+1, \dots, L_1-1 \end{cases}$$

$d_{1,n}(i)$ represents an ith element in the nth first sequence. $x(i)$ represents an ith element in the sequence x in GCP. $y(i)$ represents an ith element in the sequence y in GCP.

Based on the relationship 2, at least one 0 is spliced at the beginning and/or the end of the nth second sequence, which is equivalent to introducing a zero padding (zero padding, ZP), so that interference between a plurality of transmit ends can be reduced. In addition, the zero padding can be used to assist in synchronization or to assist in detecting a position of a target object.

Relationship 3: The nth first sequence is obtained by performing cyclic extension on the nth second sequence.

Optionally, in this scenario, the length $L_1$ of the first sequence may be greater than the length $L_2$ of the second sequence.

Optionally, an ith element in the nth first sequence and an ith element in the nth second sequence may satisfy the following relationship:

$$d_{1,n}(i) = d_{2,n}[(i + \Delta) \bmod L_2], i = 0,1,\ldots,L_1 - 1$$

$d_{1,n}(i)$ represents the $i^{th}$ element in the $n^{th}$ first sequence; $d_{2,n}(i)$ represents the $i^{th}$ element in the $n^{th}$ second sequence; $\Delta$ represents an offset of cyclic extension; mod represents a modulo operation; $L_2$ is the length of the second sequence; and $L_1$ is the length of the first sequence. It may be understood that both $d_{2,n}(i)$ and $d_{2,n}[i]$ represent the $i^{th}$ element in the $n^{th}$ second sequence.

For example, $\Delta = 2$, and $L_2 = 128$. When $i = 0$, a $0^{th}$ element $d_{1,n}(0)$ in the $n^{th}$ first sequence $= d_{2,n}[(2) \bmod 128] = d_{2,n}(2)$, that is, the $0^{th}$ element in the $n^{th}$ first sequence is equal to a $2^{nd}$ element in the $n^{th}$ second sequence. When $i = 1$, a $1^{st}$ element $d_{1,n}(1)$ in the $n^{th}$ first sequence $= d_{2,n}[(3) \bmod 128] = d_{2,n}(3)$, that is, the $0^{th}$ element in the $n^{th}$ first sequence is equal to a $3^{rd}$ element in the $n^{th}$ second sequence. By analogy, all elements in the $n^{th}$ first sequence can be obtained.

Based on the relationship 3, the length of the first sequence can be flexibly adjusted through cyclic extension, which is equivalent to introducing a cyclic prefix (cyclic prefix, CP) and/or a cyclic suffix, so that flexibility and applicability of the solution are improved. In addition, the cyclic prefix and/or the cyclic suffix can be used to assist in synchronization or to assist in detecting a position of a target object.

Relationship 4: The $n^{th}$ first sequence is obtained by splicing at least one 0 and a result obtained by performing cyclic extension on the $n^{th}$ second sequence.

For cyclic extension of the second sequence, refer to the descriptions in the relationship 3. For splicing of the cyclic extension result and the at least one 0, refer to the descriptions in the relationship 2. Details are not described herein again.

Based on the relationship 4, a cyclic prefix and/or suffix and a zero padding can be introduced while the length of the first sequence is flexibly adjusted through cyclic extension, so that interference between a plurality of transmit ends is reduced. In addition, the cyclic prefix and/or the cyclic suffix and the zero padding can be used to assist in synchronization or to assist in detecting a position of a target object.

It may be understood that, in the foregoing embodiments, methods and/or steps implemented by the transmit end apparatus may alternatively be implemented by a component (for example, a processor, a chip, a chip system, a circuit, a logical module, or software such as a chip or a circuit) that may be used in the transmit end apparatus. Methods and/or steps implemented by the receive end apparatus may alternatively be implemented by a component (for example, a processor, a chip, a chip system, a circuit, a logical module, or software such as a chip or a circuit) that may be used in the receive end apparatus.

The foregoing mainly describes the solutions provided in this application from a perspective of interaction between devices. Correspondingly, this application further provides a communication apparatus, and the communication apparatus is configured to implement the foregoing methods. The communication apparatus may be the transmit end apparatus in the foregoing method embodiments, an apparatus including the foregoing transmit end apparatus, or a component that may be used in the transmit end apparatus. Alternatively, the communication apparatus may be the receive end apparatus in the foregoing method embodiments, an apparatus including the receive end apparatus, or a component that may be used in the receive end apparatus.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each function can correspond to a separate functional module, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, another division manner may be used.

In an implementation scenario, an example in which the communication apparatus is the transmit end apparatus in the foregoing method embodiments is used. FIG. 7 is a diagram of a structure of a transmit end apparatus 70. The transmit end apparatus 70 includes a processing module 701 and a communication module 702.

In some embodiments, the transmit end apparatus 70 may further include a storage module (not shown in FIG. 7), configured to store program instructions and data.

In some embodiments, the communication module 702 is configured to implement an output and/or input function. The communication module 702 may include a communication interface. Optionally, the communication module 702 may also be a transceiver module (or referred to as a transceiver unit) configured to implement a sending and/or receiving function. In this case, the communication module 702 may include a transceiver circuit, a transceiver machine, or a transceiver.

In some embodiments, the communication module 702 may include an output module (or a receiving module) and an input module (or a sending module), respectively configured to perform output (or receiving) and input (or sending) steps performed by the transmit end apparatus in the foregoing method embodiments, and/or configured to support another process of the technology described in this specification. The processing module 701 may be configured to perform processing (for example, determining and generation) steps performed by the transmit end apparatus in the foregoing method embodiments, and/or configured to support another process of the technology described in this specification.

The processing module 701 is configured to determine N first sequences. An $n^{th}$ first sequence in the N first sequences is determined based on an $n^{th}$ second sequence in N second sequences, the $n^{th}$ second sequence is determined based on an $n^{th}$ element in a first extension sequence, $n = 0, 1, ..., N - 1$, N is a positive integer greater than 1, a first solution of equal sums of powers is determinable based on the first extension sequence, and a degree of the first solution is greater than or equal to 1. The communication module 702 is configured to output N1 first sequences in the N first sequences, where each of N1 second sequences corresponding to the N1 first sequences is a sequence in a Golay complementary pair GCP, and N1 is less than or equal to N.

Optionally, that the communication module 702 is configured to output the N1 first sequences in the N first sequences includes: The communication module 702 is configured to sequentially send the N1 first sequences in N1 first time units in N consecutive time units.

In this application, the transmit end apparatus 70 is presented in a form of functional modules resulting from integrated division. The module herein may be an ASIC, a circuit, a processor that executes one or more software or firmware programs, a memory, an integrated logic circuit, and/or another component capable of providing the foregoing functions.

In some embodiments, in hardware implementation, a person skilled in the art may figure out that the transmit end apparatus 70 may be in a form of the communication apparatus 30 shown in FIG. 3.

In an example, a function/implementation process of the processing module 701 in FIG. 7 may be implemented by the processor 301 in the communication apparatus 30 shown in FIG. 3 by invoking the computer-executable instructions stored in the memory 303. A function/implementation process of the communication module 702 in FIG. 7 may be implemented by the communication interface 304 in the communication apparatus 30 shown in FIG. 3.

In some embodiments, when the transmit end apparatus 70 in FIG. 7 is a chip or a chip system, a function/implementation process of the communication module 702 may be implemented by an input/output interface (or a communication interface) of the chip or the chip system, and a function/implementation process of the processing module 701 may be implemented by a processor (or a processing circuit) of the chip or the chip system.

The transmit end apparatus 70 provided in this embodiment may perform the foregoing method. Therefore, for technical effects that can be achieved by the transmit end apparatus, refer to the foregoing method embodiments. Details are not described herein again.

In another implementation scenario, an example in which the communication apparatus is the receive end apparatus in the foregoing method embodiments is used. FIG. 8 is a diagram of a structure of a receive end apparatus 80. The receive end apparatus 80 includes a processing module 801 and a communication module 802.

In some embodiments, the receive end apparatus 80 may further include a storage module (not shown in FIG. 8), configured to store program instructions and data.

In some embodiments, the communication module 802 is configured to implement an output and/or input function. The communication module 802 may include a communication interface. Optionally, the communication module 802 may also be a transceiver module (or referred to as a transceiver unit) configured to implement a sending and/or receiving function. In this case, the communication module 802 may include a transceiver circuit, a transceiver machine, or a transceiver.

In some embodiments, the communication module 802 may include an output module (or a receiving module) and an input module (or a sending module), respectively configured to perform output (or receiving) and input (or sending) steps performed by the receive end apparatus in the foregoing method embodiments, and/or configured to support another process of the technology described in this specification. The processing module 801 may be configured to perform processing (for example, determining and generation) steps performed by the receive end apparatus in the foregoing method embodiments, and/or configured to support another process of the technology described in this specification.

The communication module 802 is configured to receive a first signal, where the first signal is a signal resulting from transmission of N1 first sequences in N first sequences, N1 is less than or equal to N, N is a positive integer greater than 1, an $n^{th}$ first sequence in the N first sequences is determined based on an $n^{th}$ second sequence in N second sequences, each of N1 second sequences corresponding to the N1 first sequences is a sequence in a Golay complementary pair GCP, and n = 0,1, ... , $N$ - 1. The processing module 801 is configured to process the first signal based on the N1 first sequences or the N1 second sequences. The $n^{th}$ second sequence is determined based on an $n^{th}$ element in a first extension sequence, a first solution of equal sums of powers is determinable based on the first extension sequence, and a degree of the first solution is greater than or equal to 1.

In this application, the receive end apparatus 80 is presented in a form of functional modules resulting from integrated division. The module herein may be an ASIC, a circuit, a processor that executes one or more software or firmware programs, a memory, an integrated logic circuit, and/or another component capable of providing the foregoing functions.

In some embodiments, in hardware implementation, a person skilled in the art may figure out that the receive end apparatus 80 may be in a form of the communication apparatus 30 shown in FIG. 3.

In an example, a function/implementation process of the processing module 801 in FIG. 8 may be implemented by the processor 301 in the communication apparatus 30 shown in FIG. 3 by invoking the computer-executable instructions stored in the memory 303. A function/implementation process of the communication module 802 in FIG. 8 may be implemented by the communication interface 304 in the communication apparatus 30 shown in FIG. 3.

In some embodiments, when the receive end apparatus 80 in FIG. 8 is a chip or a chip system, a function/implementation process of the communication module 802 may be implemented by an input/output interface (or a communication interface) of the chip or the chip system, and a function/implementation process of the processing module 801 may be implemented by a processor (or a processing circuit) of the chip or the chip system.

The receive end apparatus 80 provided in this embodiment may perform the foregoing method. Therefore, for technical effects that can be achieved by the transmit end apparatus, refer to the foregoing method embodiments. Details are not described herein again.

In a possible product form, the transmit end apparatus and the receive end apparatus in embodiments of this application may alternatively be implemented by the following: one or more field programmable gate arrays (field programmable gate arrays, FPGAs), a programmable logic device (programmable logic device, PLD), a controller, a state machine, a gate logic, a discrete hardware component, any other proper circuit, or any combination of circuits that can perform various functions described in this application.

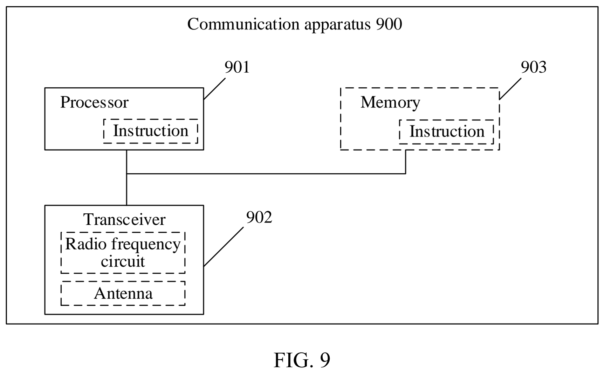

In another possible product form, the transmit end apparatus or the receive end apparatus in embodiments of this application may be implemented by a general bus architecture. For ease of description, refer to FIG. 9. FIG. 9 is a diagram of a structure of a communication apparatus 900 according to an embodiment of this application. The communication apparatus 900 includes a processor 901 and a transceiver 902. The communication apparatus 900 may be a transmit end apparatus, or a chip or a module in the transmit end apparatus. Alternatively, the communication apparatus 900 may be a receive end apparatus, or a chip or a module in the receive end apparatus. FIG. 9 shows only main components in the communication apparatus 900. In addition to the processor 901 and the transceiver 902, the communication apparatus may further include a memory 903.

Optionally, the processor 901 is mainly configured to: process a communication protocol and communication data, control the entire communication apparatus, execute a software program, and process data of the software program. The memory 903 is mainly configured to store the software program and the data. The transceiver 902 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave.

Optionally, the processor 901, the transceiver 902, and the memory 903 may be connected through a communication bus.

After the communication apparatus is powered on, the processor 901 may read the software program in the memory 903, interpret and execute instructions of the software program, and process the data of the software program. When data needs to be sent in a wireless manner, the processor 901 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives the radio frequency signal through the antenna, converts the radio frequency signal into a baseband signal, and outputs the baseband signal to the processor 901. The processor 901 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, an embodiment of this application further provides a communication apparatus. The communication apparatus includes a processor, configured to implement the method in any one of the foregoing method embodiments. The communication apparatus may be the transmit end apparatus or the receive end apparatus in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, and may be read from the memory directly or through another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions of any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separated, to be specific, may be located in one place, or may be distributed on a plurality of network units. Components shown as units may or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement a plurality of functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A sequence transmission method, wherein the method comprises:

   determining N first sequences, wherein an $n^{th}$ first sequence in the N first sequences is determined based on an $n^{th}$ second sequence in N second sequences, the $n^{th}$ second sequence is determined based on an $n^{th}$ element in a first extension sequence, n = 0,1, ..., N - 1, N is a positive integer greater than 1, a first solution of equal sums of powers is determinable based on the first extension sequence, and a degree of the first solution is greater than or equal to 1; and
   outputting N1 first sequences in the N first sequences, wherein each of N1 second sequences corresponding to the N1 first sequences is a sequence in a Golay complementary pair GCP, and N1 is less than or equal to N.

2. A sequence processing method, wherein the method comprises:

   receiving a first signal, wherein the first signal is a signal resulting from transmission of N1 first sequences in N first sequences, N1 is less than or equal to N, N is a positive integer greater than 1, an $n^{th}$ first sequence in the N first sequences is determined based on an $n^{th}$ second sequence in N second sequences, each of N1 second sequences corresponding to the N1 first sequences is a sequence in a Golay complementary pair GCP, and n = 0,1, ... , N - 1; and
   processing the first signal based on the N1 first sequences or the N1 second sequences, wherein
   the $n^{th}$ second sequence is determined based on an $n^{th}$ element in a first extension sequence, a first solution of equal sums of powers is determinable based on the first extension sequence, and a degree of the first solution is greater than or equal to 1.

3. The method according to claim 1 or 2, wherein the first extension sequence is determined based on a first base sequence, a second solution of the equal sums of powers is determinable based on the first base sequence, and a degree of the second solution is less than or equal to the degree of the first solution.

4. The method according to claim 3, wherein the second solution is determined based on a first index sequence and a second index sequence; and
   the first index sequence comprises an index of a first-type element in the first base sequence, and the first-type element corresponds to a sequence x in the GCP; and the second index sequence comprises an index of a second-type element in the first base sequence, and the second-type element corresponds to a sequence y in the GCP.

5. The method according to claim 4, wherein the first-type element is an element whose value is equal to a first value, and the second-type element is an element whose value is equal to a second value; or
   the first-type element is an element whose amplitude is greater than 0 and whose phase is a first phase, and the second-type element is an element whose amplitude is greater than 0 and whose phase is a second phase.

6. The method according to claim 5, wherein the first base sequence further comprises an element whose value is equal to a third value.

7. The method according to any one of claims 4 to 6, wherein the first index sequence $I_{base,1}$ and the second index sequence $I_{base,2}$ are the second solution of the equal sums of powers, satisfying:

$$\sum_{i=0}^{N_{base,1}-1} [l_{base,1}(i)]^k = \sum_{j=0}^{N_{base,2}-1} [l_{base,2}(j)]^k, k = 0,1,...,P$$

wherein $N_{base,1}$ is a length of the first index sequence, $l_{base,1}(i)$ represents an $i^{th}$ element in the first index sequence, $N_{base,2}$ is a length of the second index sequence, $l_{base,2}(j)$ represents a $j^{th}$ element in the second index sequence, P is the degree of the second solution, and P is a natural number.

8. The method according to any one of claims 4 to 6, wherein the second solution is determined based on the first index sequence, the second index sequence, a first weight sequence, and a second weight sequence, the first weight sequence comprises the amplitude of the first-type element, and the second weight sequence comprises the amplitude of the second-type element.

9. The method according to claim 8, wherein the first index sequence $l_{base,1}$, the second index sequence $l_{base,2}$, the first weight sequence $q_{base,1}$, and the second weight sequence $q_{base,2}$ are the second solution of the equal sums of powers, satisfying:

$$\sum_{i=0}^{N_{base,1}-1} q_{base,1}(i)[l_{base,1}(i)]^k = \sum_{j=0}^{N_{base,2}-1} q_{base,2}(j)[l_{base,2}(j)]^k , k = 0,1,\dots,P$$

wherein $N_{base,1}$ is a length of the first index sequence, $q_{base,1}(i)$ represents an $i^{th}$ element in the first weight sequence, $l_{base,1}(i)$ represents an $i^{th}$ element in the first index sequence, $N_{base,2}$ is a length of the second index sequence, $q_{base,2}(j)$ represents a $j^{th}$ element in the second weight sequence, $l_{base,2}(j)$ represents a $j^{th}$ element in the second index sequence, $P$ is the degree of the second solution, and $P$ is a natural number.

10. The method according to any one of claims 3 to 9, wherein the first extension sequence is the same as the first base sequence.

11. The method according to any one of claims 3 to 9, wherein the first extension sequence is determined based on the first base sequence and an offset sequence, a length of the offset sequence is $M$, and $M$ is a positive integer; and

a length N of the first extension sequence, a length $N_{base}$ of the first base sequence, and an element in the offset sequence satisfy:

$$N = N_{base} + \sum_{m=0}^{M-1} t(m)$$

wherein $t(m)$ represents an $m^{th}$ element in the offset sequence, and $t(m)$ is a positive integer.

12. The method according to claim 11, wherein the $n^{th}$ element in the first extension sequence is the same as an $n^{th}$ element in a sequence $s_{M-1}$, and the sequence $s_{M-1}$ satisfies:

$$s_m = [s_{m-1}, \mathbf{0}_{1 \times t(m)}] + [\mathbf{0}_{1 \times t(m)}, -s_{m-1}], m = 0,1,\dots,M-1$$

wherein $s_{-1}$ is the same as the first base sequence, $\mathbf{0}_{1 \times t(m)}$ represents a row vector comprising $t(m)$ 0s, and $s_m$ comprises $N_{base} + \sum_{i=0}^{m} t(i)$ elements.

13. The method according to claim 11, wherein the $n^{th}$ element in the first extension sequence is the same as an $n^{th}$ element in a sequence $s_{M-1}$, and the sequence $s_{M-1}$ satisfies:

$$s_m(i) = s_{m-1}(i) - s_{m-1}(i - t(m)), m = 0,1,\dots,M-1$$

wherein $s_{-1}$ is the same as the first base sequence, $s_m$ comprises $N_{base} + \sum_{j=0}^{m} t(j)$ elements, and

$$i = 0,1, \ldots, N_{base} + \sum_{j=0}^{m} t(j) - 1 \text{ ; and}$$

when $i \geq N_{base} + \sum_{j=0}^{m-1} t(j)$ , $s_{m-1}(i) = 0$; and when $i - t(m) < 0$, $s_{m-1}(i - t(m)) = 0$.

14. The method according to claim 11, wherein the nth element in the first extension sequence is a difference between a first quantity and a second quantity, the first quantity is a quantity of elements whose values are n in a sequence $A_{M-1}$, the second quantity is a quantity of elements whose values are n in a sequence $B_{M-1}$, and the sequence $A_{M-1}$ and the sequence $B_{M-1}$ satisfy:

$$A_m = [A_{m-1}, B_{m-1} + t(m)], m = 0,1, \ldots, M - 1$$

$$B_m = [B_{m-1}, A_{m-1} + t(m)], m = 0,1, \ldots, M - 1$$

wherein $A_{-1}$ is a sequence comprising $q_{base,1}(i)$ $l_{base,1}(i)$s, $i = 0,1, \ldots , N_{base,1}$ - 1, $B_{-1}$ is a sequence comprising $q_{base,2}(j)$ $l_{base,2}(j)$s, and $j = 0,1, \ldots , N_{base,2}$ - 1; and
$q_{base,1}(i)$ represents the ith element in the first weight sequence, $l_{base,1}(i)$ represents the ith element in the first index sequence, $q_{base,2}(i)$ represents the jth element in the second weight sequence, and $l_{base,2}(j)$ represents the jth element in the second index sequence.

15. The method according to any one of claims 11 to 14, wherein the degree of the second solution is P, the degree of the first solution is $P+M$, and P is a natural number.

16. The method according to any one of claims 11 to 15, wherein the first solution is determined based on a first extension index sequence and a second extension index sequence; and
the first extension index sequence comprises an index of a first-type element in the first extension sequence, and a second sequence corresponding to the first-type element is the sequence x in the GCP; and the second extension index sequence comprises an index of a second-type element in the first extension sequence, and a second sequence corresponding to the second-type element is the sequence y in the GCP.

17. The method according to claim 16, wherein the first extension index sequence $l_{ext,1}$ and the second extension index sequence $l_{ext,2}$ are the first solution of the equal sums of powers, satisfying:

$$\sum_{i=0}^{N_{ext,1}-1} [l_{ext,1}(i)]^k = \sum_{j=0}^{N_{ext,2}-1} [l_{ext,2}(j)]^k , k = 0,1, \ldots, P + M$$

wherein $N_{ext,1}$ is a length of the first extension index sequence, $l_{ext,1}(i)$ represents an ith element in the first extension index sequence, $N_{ext,2}$ is a length of the second extension index sequence, $l_{ext,2}(j)$ represents a jth element in the second extension index sequence, P is the degree of the second solution, $P$ is a natural number, and $P + M$ is the degree of the first solution.

18. The method according to claim 16, wherein the first solution is determined based on the first extension index sequence, the second extension index sequence, a first extension weight sequence, and a second extension weight sequence, the first extension weight sequence comprises an amplitude of the first-type element, and the second extension weight sequence comprises an amplitude of the second-type element.

19. The method according to claim 18, wherein the first extension index sequence $l_{exe,1}$, the second extension index sequence $l_{ext,2}$, the first extension weight sequence $q_{ext,1}$, and the second extension weight sequence $q_{ext,2}$ are the first solution of the equal sums of powers, satisfying:

$$\sum_{i=0}^{N_{ext,1}-1} q_{ext,1}(i)[l_{ext,1}(i)]^k = \sum_{j=0}^{N_{ext,2}-1} q_{ext,2}(j)[l_{ext,2}(j)]^k , k = 0,1, \ldots, P + M$$

wherein $N_{ext,1}$ is a length of the first extension index sequence, $q_{ext,1}(i)$ represents an $i^{th}$ element in the first extension weight sequence, $I_{ext,1}(i)$ represents an $i^{th}$ element in the first extension index sequence, $N_{ext,2}$ is a length of the second extension index sequence, $q_{ext,2}(j)$ represents a $j^{th}$ element in the second extension weight sequence, $I_{ext,2}(j)$ represents a $j^{th}$ element in the second extension index sequence, $P$ is the degree of the second solution, $P$ is a natural number, and $P + M$ is the degree of the first solution.

20. The method according to any one of claims 1 to 19, wherein the $n^{th}$ element $\boldsymbol{s}_{ext}(n)$ in the first extension sequence satisfies:

$$
\boldsymbol{s}_{ext}(n) = \begin{cases}
1 & , n = 0 \\
-3 & , n = 1 \\
4 & , 1 < n < N - 2, n \bmod 2 = 0 \\
-4 & , 1 < n < N - 2, n \bmod 2 = 1 \\
3 & , n = N - 2 \\
-1 & , n = N - 1
\end{cases}
$$

wherein mod represents a modulo operation.

21. The method according to any one of claims 1 to 20, wherein

when the $n^{th}$ element in the first extension sequence is the first value, the $n^{th}$ second sequence in the N second sequences is the sequence x in the GCP; or when the $n^{th}$ element in the first extension sequence is the second value, the $n^{th}$ second sequence in the N second sequences is the sequence y in the GCP;
or
when an amplitude of the $n^{th}$ element in the first extension sequence is greater than 0 and a phase is the first phase, the $n^{th}$ second sequence in the N second sequences is the sequence x in the GCP; or when an amplitude of the $n^{th}$ element in the first extension sequence is greater than 0 and a phase is the second phase, the $n^{th}$ second sequence in the N second sequences is the sequence y in the GCP.

22. The method according to claim 21, wherein
when the $n^{th}$ element in the first extension sequence is the third value, elements in the $n^{th}$ second sequence in the N second sequences are the same.

23. The method according to any one of claims 1 to 22, wherein a power of the $n^{th}$ first sequence in the N first sequences is determined based on the $n^{th}$ element in the first extension sequence.

24. The method according to claim 23, wherein a ratio of the power of the $n^{th}$ first sequence in the N first sequences to a power of an $n'^{th}$ first sequence is equal to $|\boldsymbol{s}_{ext}(n)|/|\boldsymbol{s}_{ext}(n')|$;
or

a ratio of the power of the $n^{th}$ first sequence in the N first sequences to a power of an $n'^{th}$ first sequence is equal to $[\boldsymbol{s}_{ext}(n)]^2/[\boldsymbol{s}_{ext}(n')]^2$, wherein
$|\boldsymbol{s}_{ext}(n)|$ represents the amplitude of the $n^{th}$ element in the first extension sequence, $|\boldsymbol{s}_{ext}(n')|$ represents an $n'^{th}$ element in the first extension sequence, $|\boldsymbol{s}_{ext}(n')| \neq 0$, n and n' are any integers from 0 to N-1, and $n \neq n'$.

25. A communication apparatus, wherein the communication apparatus comprises a processing module and a communication module;

the processing module is configured to determine N first sequences, wherein an $n^{th}$ first sequence in the N first sequences is determined based on an $n^{th}$ second sequence in N second sequences, the $n^{th}$ second sequence is determined based on an $n^{th}$ element in a first extension sequence, $n = 0, 1, ..., N - 1$, N is a positive integer greater than 1, a first solution of equal sums of powers is determinable based on the first extension sequence, and a degree of the first solution is greater than or equal to 1; and
the communication module is configured to output N1 first sequences in the N first sequences, wherein each of N1 second sequences corresponding to the N1 first sequences is a sequence in a Golay complementary pair GCP, and N1 is less than or equal to N.

**26.** A communication apparatus, wherein the communication apparatus comprises a processing module and a communication module;

the communication module is configured to receive a first signal, wherein the first signal is a signal resulting from transmission of N1 first sequences in N first sequences, N1 is less than or equal to N, N is a positive integer greater than 1, an $n^{th}$ first sequence in the N first sequences is determined based on an $n^{th}$ second sequence in N second sequences, each of N1 second sequences corresponding to the N1 first sequences is a sequence in a Golay complementary pair GCP, and *n = 0,1, ..., N - 1; and*

the processing module is configured to process the first signal based on the N1 first sequences or the N1 second sequences, wherein

the $n^{th}$ second sequence is determined based on an $n^{th}$ element in a first extension sequence, a first solution of equal sums of powers is determinable based on the first extension sequence, and a degree of the first solution is greater than or equal to 1.

**27.** The communication apparatus according to claim 25 or 26, wherein the first extension sequence is determined based on a first base sequence, a second solution of the equal sums of powers is determinable based on the first base sequence, and a degree of the second solution is less than or equal to the degree of the first solution.

**28.** The communication apparatus according to claim 27, wherein the second solution is determined based on a first index sequence and a second index sequence; and

the first index sequence comprises an index of a first-type element in the first base sequence, and the first-type element corresponds to a sequence x in the GCP; and the second index sequence comprises an index of a second-type element in the first base sequence, and the second-type element corresponds to a sequence y in the GCP.

**29.** The communication apparatus according to claim 28, wherein the first-type element is an element whose value is equal to a first value, and the second-type element is an element whose value is equal to a second value; or

the first-type element is an element whose amplitude is greater than 0 and whose phase is a first phase, and the second-type element is an element whose amplitude is greater than 0 and whose phase is a second phase.

**30.** The communication apparatus according to claim 29, wherein the first base sequence further comprises an element whose value is equal to a third value.

**31.** The communication apparatus according to any one of claims 28 to 30, wherein the first index sequence $\boldsymbol{l}_{base,1}$ and the second index sequence $\boldsymbol{l}_{base,2}$ are the second solution of the equal sums of powers, satisfying:

$$\sum_{i=0}^{N_{base,1}-1} [l_{base,1}(i)]^k = \sum_{j=0}^{N_{base,2}-1} [l_{base,2}(j)]^k, k = 0,1, \dots, P$$

wherein $N_{base,1}$ is a length of the first index sequence, $l_{base,1}(i)$ represents an $i^{th}$ element in the first index sequence, $N_{base,2}$ is a length of the second index sequence, $l_{base,2}(j)$ represents a $j^{th}$ element in the second index sequence, P is the degree of the second solution, and P is a natural number.

**32.** The communication apparatus according to any one of claims 28 to 30, wherein the second solution is determined based on the first index sequence, the second index sequence, a first weight sequence, and a second weight sequence, the first weight sequence comprises the amplitude of the first-type element, and the second weight sequence comprises the amplitude of the second-type element.

**33.** The communication apparatus according to claim 32, wherein the first index sequence $\boldsymbol{l}_{base,1}$, the second index sequence $\boldsymbol{l}_{base,2}$, the first weight sequence $\boldsymbol{q}_{base,1}$, and the second weight sequence $\boldsymbol{q}_{base,2}$ are the second solution of the equal sums of powers, satisfying:

$$\sum_{i=0}^{N_{base,1}-1} q_{base,1}(i)[l_{base,1}(i)]^k = \sum_{j=0}^{N_{base,2}-1} q_{base,2}(j)[l_{base,2}(j)]^k, k = 0,1, \dots, P$$

wherein $N_{base,1}$ is a length of the first index sequence, $q_{base,1}(i)$ represents an $i^{th}$ element in the first weight sequence, $I_{base,1}(i)$ represents an $i^{th}$ element in the first index sequence, $N_{base,2}$ is a length of the second index sequence, $q_{base,2}(j)$ represents a $j^{th}$ element in the second weight sequence, $I_{base,2}(j)$ represents a $j^{th}$ element in the second index sequence, $P$ is the degree of the second solution, and $P$ is a natural number.

34. The communication apparatus according to any one of claims 27 to 33, wherein the first extension sequence is the same as the first base sequence.

35. The communication apparatus according to any one of claims 27 to 33, wherein the first extension sequence is determined based on the first base sequence and an offset sequence, a length of the offset sequence is $M$, and $M$ is a positive integer; and

a length N of the first extension sequence, a length $N_{base}$ of the first base sequence, and an element in the offset sequence satisfy:

$$N = N_{base} + \sum_{m=0}^{M-1} t(m)$$

wherein $t(m)$ represents an $m^{th}$ element in the offset sequence, and $t(m)$ is a positive integer.

36. The communication apparatus according to claim 35, wherein the $n^{th}$ element in the first extension sequence is the same as an $n^{th}$ element in a sequence $\boldsymbol{s}_{M-1}$, and the sequence $\boldsymbol{s}_{M-1}$ satisfies:

$$\boldsymbol{s}_m = \left[\boldsymbol{s}_{m-1}, \boldsymbol{0}_{1 \times t(m)}\right] + \left[\boldsymbol{0}_{1 \times t(m)}, -\boldsymbol{s}_{m-1}\right], m = 0,1,\dots,M-1$$

wherein $\boldsymbol{s}_{-1}$ is the same as the first base sequence, $\boldsymbol{0}_{1 \times t(m)}$ represents a row vector comprising $t(m)$ 0s, and $\boldsymbol{s}_m$ comprises $N_{base} + \sum_{i=0}^{m} t(i)$ elements.

37. The communication apparatus according to claim 35, wherein the $n^{th}$ element in the first extension sequence is the same as an $n^{th}$ element in a sequence $\boldsymbol{s}_{M-1}$, and the sequence $\boldsymbol{s}_{M-1}$ satisfies:

$$\boldsymbol{s}_m(i) = \boldsymbol{s}_{m-1}(i) - \boldsymbol{s}_{m-1}\big(i - t(m)\big), m = 0,1,\dots,M-1$$

wherein $\boldsymbol{s}_{-1}$ is the same as the first base sequence, $\boldsymbol{s}_m$ comprises $N_{base} + \sum_{j=0}^{m} t(j)$ elements, and $i = 0,1,\dots, N_{base} + \sum_{j=0}^{m} t(j) - 1$ ; and

when $i \geq N_{base} + \sum_{j=0}^{m-1} t(j)$ , $\boldsymbol{s}_{m-1}(i) = 0$; and when $i - t(m) < 0$, $\boldsymbol{s}_{m-1}(i - t(m)) = 0$.

38. The communication apparatus according to claim 35, wherein the $n^{th}$ element in the first extension sequence is a difference between a first quantity and a second quantity, the first quantity is a quantity of elements whose values are n in a sequence $\boldsymbol{A}_{M-1}$, the second quantity is a quantity of elements whose values are n in a sequence $\boldsymbol{B}_{M-1}$, and the sequence $\boldsymbol{A}_{M-1}$ and the sequence $\boldsymbol{B}_{M-1}$ satisfy:

$$\boldsymbol{A}_m = [\boldsymbol{A}_{m-1}, \boldsymbol{B}_{m-1} + t(m)], m = 0,1,\dots,M-1$$

$$\boldsymbol{B}_m = [\boldsymbol{B}_{m-1}, \boldsymbol{A}_{m-1} + t(m)], m = 0,1,\dots,M-1$$

wherein $\boldsymbol{A}_{-1}$ is a sequence comprising $q_{base,1}(i)$ $I_{base,1}(i)$s, $i = 0,1, \dots, N_{base,1} - 1$, $\boldsymbol{B}_{-1}$ is a sequence comprising $q_{base,2}(j)$ $I_{base,2}(j)$s, and $j = 0,1, \dots, N_{base,2} - 1$; and
$q_{base,1}(i)$ represents the $i^{th}$ element in the first weight sequence, $I_{base,1}(i)$ represents the $i^{th}$ element in the first index sequence, $q_{base,2}(i)$ represents the $j^{th}$ element in the second weight sequence, and $I_{base,2}(j)$ represents the $j^{th}$ element in the second index sequence.

**39.** The communication apparatus according to any one of claims 35 to 38, wherein the degree of the second solution is $P$, the degree of the first solution is $P+M$, and P is a natural number.

**40.** The communication apparatus according to any one of claims 35 to 39, wherein the first solution is determined based on a first extension index sequence and a second extension index sequence; and

the first extension index sequence comprises an index of a first-type element in the first extension sequence, and a second sequence corresponding to the first-type element is the sequence x in the GCP; and the second extension index sequence comprises an index of a second-type element in the first extension sequence, and a second sequence corresponding to the second-type element is the sequence y in the GCP.

**41.** The communication apparatus according to claim 40, wherein the first extension index sequence $I_{ext,1}$ and the second extension index sequence $I_{ext,2}$ are the first solution of the equal sums of powers, satisfying:

$$\sum_{i=0}^{N_{ext,1}-1} [l_{ext,1}(i)]^k = \sum_{j=0}^{N_{ext,2}-1} [l_{ext,2}(j)]^k \, , k = 0,1,\dots,P+M$$

wherein $N_{ext,1}$ is a length of the first extension index sequence, $l_{ext,1}(i)$ represents an $i^{th}$ element in the first extension index sequence, $N_{ext,2}$ is a length of the second extension index sequence, $l_{ext,2}(j)$ represents a $j^{th}$ element in the second extension index sequence, P is the degree of the second solution, $P$ is a natural number, and $P + M$ is the degree of the first solution.

**42.** The communication apparatus according to claim 40, wherein the first solution is determined based on the first extension index sequence, the second extension index sequence, a first extension weight sequence, and a second extension weight sequence, the first extension weight sequence comprises an amplitude of the first-type element, and the second extension weight sequence comprises an amplitude of the second-type element.

**43.** The communication apparatus according to claim 42, wherein the first extension index sequence $I_{ext,1}$, the second extension index sequence $I_{ext,2}$, the first extension weight sequence $q_{ext,1}$, and the second extension weight sequence $q_{ext,2}$ are the first solution of the equal sums of powers, satisfying:

$$\sum_{i=0}^{N_{ext,1}-1} q_{ext,1}(i)[l_{ext,1}(i)]^k = \sum_{j=0}^{N_{ext,2}-1} q_{ext,2}(j)[l_{ext,2}(j)]^k \, , k = 0,1,\dots,P+M$$

wherein $N_{ext,1}$ is a length of the first extension index sequence, $q_{ext,1}(i)$ represents an $i^{th}$ element in the first extension weight sequence, $l_{ext,1}(i)$ represents an $i^{th}$ element in the first extension index sequence, $N_{ext,2}$ is a length of the second extension index sequence, $q_{ext,2}(j)$ represents a $j^{th}$ element in the second extension weight sequence, $l_{ext,2}(j)$ represents a $j^{th}$ element in the second extension index sequence, $P$ is the degree of the second solution, P is a natural number, and $P + M$ is the degree of the first solution.

**44.** The communication apparatus according to any one of claims 26 to 43, wherein the $n^{th}$ element $s_{ext}(n)$ in the first extension sequence satisfies:

$$s_{ext}(n) = \begin{cases} 1 & , n = 0 \\ -3 & , n = 1 \\ 4 & , 1 < n < N - 2, n \bmod 2 = 0 \\ -4 & , 1 < n < N - 2, n \bmod 2 = 1 \\ 3 & , n = N - 2 \\ -1 & , n = N - 1 \end{cases}$$

wherein mod represents a modulo operation.

45. The communication apparatus according to any one of claims 26 to 44, wherein

when the $n^{th}$ element in the first extension sequence is the first value, the $n^{th}$ second sequence in the N second sequences is the sequence x in the GCP; or when the $n^{th}$ element in the first extension sequence is the second value, the $n^{th}$ second sequence in the N second sequences is the sequence y in the GCP; or

when an amplitude of the $n^{th}$ element in the first extension sequence is greater than 0 and a phase is the first phase, the $n^{th}$ second sequence in the N second sequences is the sequence x in the GCP; or when an amplitude of the $n^{th}$ element in the first extension sequence is greater than 0 and a phase is the second phase, the $n^{th}$ second sequence in the N second sequences is the sequence y in the GCP.

46. The communication apparatus according to claim 45, wherein
when the $n^{th}$ element in the first extension sequence is the third value, elements in the $n^{th}$ second sequence in the N second sequences are the same.

47. The communication apparatus according to any one of claims 26 to 46, wherein a power of the $n^{th}$ first sequence in the N first sequences is determined based on the $n^{th}$ element in the first extension sequence.

48. The communication apparatus according to claim 47, wherein a ratio of the power of the $n^{th}$ first sequence in the N first sequences to a power of an $n'^{th}$ first sequence is equal to $|\boldsymbol{s}_{ext}(n)|/|\boldsymbol{s}_{ext}(n')|$;
or

a ratio of the power of the $n^{th}$ first sequence in the N first sequences to a power of an $n'^{th}$ first sequence is equal to $[\boldsymbol{s}_{ext}(n)]^2/[\boldsymbol{s}_{ext}(n')]^2$, wherein
$|\boldsymbol{s}_{ext}(n)|$ represents the amplitude of the $n^{th}$ element in the first extension sequence, $|\boldsymbol{s}_{ext}(n')|$ represents an $n'^{th}$ element in the first extension sequence, $|\boldsymbol{s}_{ext}(n')| \neq 0$, n and n' are any integers from 0 to N-1, and $n \neq n'$.

49. A communication apparatus, wherein the communication apparatus comprises a processor, and the processor is configured to run a computer program or instructions, or is configured to cause, by using a logic circuit, the communication apparatus to perform the method according to any one of claims 1 to 24.

50. A computer-readable storage medium, wherein the computer-readable storage medium stores computer instructions or a program, and when the computer instructions or the program is run on a computer, the method according to any one of claims 1 to 24 is performed.

51. A computer program product, wherein the computer program product comprises computer instructions, and when a part or all of the computer instructions are run, the method according to any one of claims 1 to 24 is performed.

52. A communication system, wherein the communication system comprises a transmit end apparatus and a receive end apparatus, the transmit end apparatus is configured to perform the method according to any one of claims 1 and 3 to 24, and the receive end apparatus is configured to perform the method according to any one of claims 2 to 24.

| | | 1 | 2 | 3 |
|---|---|---|---|---|
| 1 | 2 | 3 | | |

(a)

| | 1 | 2 | 3 |
|---|---|---|---|
| 1 | 2 | 3 | |

(b)

FIG. 1a

FIG. 1b

FIG. 1c

| Transmit end apparatus | ↔ | Receive end apparatus |

FIG. 2

30

FIG. 3

Transmit end
apparatus

Receive end
apparatus

S401: Determine N first sequences, where an $n^{th}$ first sequence
is determined based on an $n^{th}$ second sequence, the $n^{th}$ second
sequence is determined based on an $n^{th}$ element in a first
extension sequence, a first solution of equal sums of powers is
determinable based on the first extension sequence, and a
degree of the first solution is greater than or equal to 1

S402: The transmit end apparatus
outputs N1 first sequences, and the
receive end apparatus receives a first
signal (a signal resulting from
transmission of the N1 first sequences),
where N is greater than or equal to N1

S403: Process the first signal based on the
N1 first sequences or N1 second
sequences

FIG. 4

FIG. 5

| 0 | 1 | 2 | 3 | 4 | 5 | 6 | 7 | 8 | 9 | 10 | 11 | 12 | 13 |

⬚ First time unit

## FIG. 6

Transmit end apparatus — 70

Processing module — 701

Communication module — 702

## FIG. 7

Receive end apparatus — 80

Processing module — 801

Communication module — 802

## FIG. 8

FIG. 9

## INTERNATIONAL SEARCH REPORT

| International application No. |
| --- |
| **PCT/CN2023/084180** |

| A. | CLASSIFICATION OF SUBJECT MATTER |
| --- | --- |

H04L27/26(2006.01)i;  G01S13/58(2006.01)n

According to International Patent Classification (IPC) or to both national classification and IPC

| B. | FIELDS SEARCHED |
| --- | --- |

Minimum documentation searched (classification system followed by classification symbols)

IPC:  H04L27/-;  G01S13/-

Documentation searched other than minimum documentation to the extent that such documents are included in the fields searched

Electronic data base consulted during the international search (name of data base and, where practicable, search terms used)

CNTXT, ENTXTC, VEN, ENTXT: 华为, 胡远洲, 汪凡, 序列, 数据, 信号, 传输, 发送, 等幂和, 格雷, 互补, 伯努利, 模糊区, 模糊, sequence, data, signal, transmission, equal power sum, equal sums of like powers, prouhet-tarry-escott problem, golay, complement, Bernoulli, ambiguous, region.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114916009 A (HUAWEI TECHNOLOGIES CO., LTD.) 16 August 2022 (2022-08-16) entire document | 1-52 |
| A | CN 113950069 A (HUAWEI TECHNOLOGIES CO., LTD.) 18 January 2022 (2022-01-18) entire document | 1-52 |
| A | CN 105162745 A (JIANGSU ZTE WAVETONE SCIENCE & TECHNOLOGY LTD.) 16 December 2015 (2015-12-16) entire document | 1-52 |
| A | CN 107040489 A (LG ELECTRONICS INC.) 11 August 2017 (2017-08-11) entire document | 1-52 |
| A | CN 114902774 A (HUAWEI TECHNOLOGIES CO., LTD.) 12 August 2022 (2022-08-12) entire document | 1-52 |
| A | CN 115219987 A (XIAMEN UNIVERSITY OF TECHNOLOGY) 21 October 2022 (2022-10-21) entire document | 1-52 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 November 2023** | **21 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/084180** |

**C.      DOCUMENTS CONSIDERED TO BE RELEVANT**

| Category* | Citation of document, with indication, where appropriate, of the relevant passages | Relevant to claim No. |
|---|---|---|
| A | US 2016342594 A1 (SPOTIFY AB) 24 November 2016 (2016-11-24) <br> entire document | 1-52 |
| A | US 2018331730 A1 (QUALCOMM INC.) 15 November 2018 (2018-11-15) <br> entire document | 1-52 |
| A | US 2019042648 A1 (SPOTIFY AB) 07 February 2019 (2019-02-07) <br> entire document | 1-52 |

Form PCT/ISA/210 (second sheet) (July 2022)

## INTERNATIONAL SEARCH REPORT
### Information on patent family members

International application No.

**PCT/CN2023/084180**

| Patent document cited in search report | | | Publication date (day/month/year) | Patent family member(s) | | | Publication date (day/month/year) |
|---|---|---|---|---|---|---|---|
| CN | 114916009 | A | 16 August 2022 | None | | | |
| CN | 113950069 | A | 18 January 2022 | None | | | |
| CN | 105162745 | A | 16 December 2015 | None | | | |
| CN | 107040489 | A | 11 August 2017 | US | 2019141652 | A1 | 09 May 2019 |
| | | | | US | 10681660 | B2 | 09 June 2020 |
| | | | | WO | 2017135570 | A1 | 10 August 2017 |
| | | | | US | 2017223650 | A1 | 03 August 2017 |
| | | | | US | 10306576 | B2 | 28 May 2019 |
| | | | | EP | 3737028 | A1 | 11 November 2020 |
| | | | | EP | 3737028 | B1 | 11 October 2023 |
| | | | | KR | 20170092442 | A | 11 August 2017 |
| | | | | EP | 3203674 | A1 | 09 August 2017 |
| | | | | EP | 3203674 | B1 | 29 July 2020 |
| | | | | US | 2020267675 | A1 | 20 August 2020 |
| | | | | US | 11350379 | B2 | 31 May 2022 |
| | | | | US | 2017223649 | A1 | 03 August 2017 |
| | | | | US | 10149260 | B2 | 04 December 2018 |
| CN | 114902774 | A | 12 August 2022 | None | | | |
| CN | 115219987 | A | 21 October 2022 | None | | | |
| US | 2016342594 | A1 | 24 November 2016 | US | 10025786 | B2 | 17 July 2018 |
| | | | | EP | 3298513 | A1 | 28 March 2018 |
| | | | | EP | 3298513 | B1 | 08 January 2020 |
| | | | | US | 2018300331 | A1 | 18 October 2018 |
| | | | | US | 10387481 | B2 | 20 August 2019 |
| | | | | WO | 2016186881 | A1 | 24 November 2016 |
| US | 2018331730 | A1 | 15 November 2018 | WO | 2018208811 | A1 | 15 November 2018 |
| US | 2019042648 | A1 | 07 February 2019 | EP | 3438854 | A1 | 06 February 2019 |
| | | | | US | 2019258670 | A1 | 22 August 2019 |
| | | | | US | 10990625 | B2 | 27 April 2021 |
| | | | | US | 2021294843 | A1 | 23 September 2021 |
| | | | | US | 11775580 | B2 | 03 October 2023 |
| | | | | US | 10223447 | B2 | 05 March 2019 |

Form PCT/ISA/210 (patent family annex) (July 2022)